(19) Europäisches Patentamt
European Patent Office
Office européen des brevets

(11) **EP 2 164 885 B1**

(12) **EUROPÄISCHE PATENTSCHRIFT**

(45) Veröffentlichungstag und Bekanntmachung des Hinweises auf die Patenterteilung:
**12.03.2014 Patentblatt 2014/11**

(21) Anmeldenummer: 08736075.6

(22) Anmeldetag: **10.04.2008**

(51) Int Cl.:
*C08F 290/04* (2006.01)    *C10M 143/00* (2006.01)
*C10M 145/14* (2006.01)

(86) Internationale Anmeldenummer:
**PCT/EP2008/054355**

(87) Internationale Veröffentlichungsnummer:
**WO 2009/007147 (15.01.2009 Gazette 2009/03)**

(54) **VERWENDUNG VON KAMMPOLYMEREN ZUR VERRINGERUNG DES KRAFTSTOFFVERBRAUCHS**

USE OF COMB POLYMERS FOR REDUCING FUEL CONSUMPTION

UTILISATION DE POLYMÈRES EN PEIGNE POUR RÉDUIRE LA CONSOMMATION DE CARBURANT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **09.07.2007 DE 102007032120**
**26.09.2007 DE 102007046223**

(43) Veröffentlichungstag der Anmeldung:
**24.03.2010 Patentblatt 2010/12**

(73) Patentinhaber: **Evonik Oil Additives GmbH**
**64293 Darmstadt (DE)**

(72) Erfinder:
• **STÖHR, Torsten**
  **60326 Frankfurt (DE)**
• **JANSSEN, Dieter**
  **64823 Gross-Umstadt (DE)**
• **SCHNABEL, Jürgen**
  **64367 Mühltal (DE)**
• **EISENBERG, Boris**
  **64646 Heppenheim (DE)**
• **GÖRLITZER, Hans**
  **63303 Dreieich (DE)**
• **MÜLLER, Michael**
  **64625 Bensheim (DE)**

(56) Entgegenhaltungen:
EP-A- 0 699 694        DE-A1- 4 409 259
DE-A1-102005 031 244    US-A- 5 565 130

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft die Verwendung von Kammpolymeren zur Verringerung des Kraftstoffverbrauchs.

Die Verringerung des Kraftstoffverbrauchs von Fahrzeugen wird aus vielfältigen Gründen immer wichtiger. Neben vielen konstruktiven Verbesserungen an den Fahrzeugen an sich, werden auch Anstrengungen unternommen, die durch die Schmiermittel, beispielsweise die Motor- und Getriebeöle, verursachten Planschverluste (*churning loss*) zu minimieren.

Es ist bekannt, dass sich Kraftstoff-sparende (*fuel economical*) Motorölformulierungen durch gute VI-Eigenschaften auszeichnenden. Dementsprechend sollen einerseits bei hohen Temperaturen ausreichend hohe Viskositäten generiert werden, um nicht-abreißende, dicke Schmierfilme zu erhalten, die zu einer Minimierung des Verschleißes (*wear*) führen. Andererseits sind möglichst geringe Viskositäten bei tiefen Temperaturen wünschenswert, um den Kraftstoffverbrauch durch Minimierung der internen Reibung im Motoröl zu verringern. Motoröle, die bei tiefen Temperaturen eine relativ geringe Viskosität aufweisen, jedoch bei hohen Temperaturen einsetzbar sind, werden vielfach als Leichtlauföle bezeichnet.

Das Formulieren von Motorölen ist bekanntermaßen definiert über die SAE J300 Norm (SAE = Society of Automotive Engineers). Diese Norm klassifiziert Motorenöle in die SAE Viskositätsgrade xW-y mit x = 0, 5, 10, 15, 20, 35 und y = 20, 30, 40, 50, 60. Dies erfolgt über die CCS-Viskosität (*cold cranking simulator*, ASTM D5292), die dynamischen Viskosität DV und die Fließgrenze YS *(yield stress)* im *mini rotationary viscosimeter* unter Temperaturprogramm 1 (MRV-TP1, ASTM D4684), die kinematischen Viskosität KV (ASTM D445) sowie die Hochscherviskosität HTHS (*high temperature high shear*) (ASTM D4683, D4741 und D5471).

Während sich eine neuere Formulierungsstrategie für Kraftstoff-sparende Motorenöle auf eine geringe kinematische $KV_{40}$, d.h. hohen kinematischen VI, konzentriert (vgl. K. Hedrich, M. A. Mueller, M. Fischer: "Evaluation of Ashless, Phoshorus Free and Low Sulfur Polymeric Additives that Improve the Performance of Fuel Efficient Engine Oils" in Conference Proceedings of the International Tribology Conference (ITC 2005) at Kobe/Japan), zielt die etablierte Formulierungsstrategie auf geringe Hochscherviskosität $HTHS_\vartheta$ mit 9=70, 80, 90 oder 100°C, d.h. die $HTHS_\vartheta$ soll möglichst wenig höher sein als die $HTHS_{150}$ (Zielgröße beim Formulieren der SAE J300) (vgl. Toshio Sakurai (ed.): "Additives for Petroleum-derived Products", Saiwai Shobou Press, 1986; A. K. Gangopadhyay, J. Sorab, P. A. Willermet, K. Schriewer, K. Fyfe, P. K. S Lai: "Prediction of ASTM Sequence VI and VIA Fuel Economy Based on Laboratory Bench Tests", SAE Technical Paper Series 961140; N. Nakamura: Idemitsu Technical Review 43 (2000), 24; und T. Mang, W. Dresel (eds.): "Lubricants and Lubrication", Wiley-VCH, Weinheim 2001). Die neuere und die etablierte Formulierungsstrategie zur Kraftstoffersparnis sind - wie oben dargestellt - nicht kongruent und in ihrer Gültigkeit nicht unumstritten.

Gleichzeitig werden Motorenöle definiert durch ihre Nachscherviskosität $KV_{100}$. Hier ist es für viele Anwender durchaus wünschenswert nach einer Scherung z.B. durch 30 Zyklen Boschpumpe (DIN 51382), weiterhin im KV100-Fenster der SAE J300 zu liegen.

Eine weitverbreitete Klasse an kommerziellen VI-Verbesserern ist mit hydrierten Styrol-Dien-Copolymeren (HSD) gegeben. Diese HSD können sowohl in Form von $(-B-A)_n$-Sternen (US 4 116 917 der Shell Oil Company) als auch in Form von A-B-Diblock- und A-B-A-Triblock-Copolymeren (US 3 772 196 und US 4 788 316 der Shell Oil Company) vorliegen. Hierbei stellt A einen Block aus hydriertem Polyisopren und B einen Divinylbenzol-vernetzten Polystyrolkern bzw. einen Block aus Polystyrol dar. Die Infineum SV Serie der Infineum International Ltd Abington/UK umfasst Produkte dieses Typs. Typische Sternpolymere sind gegeben mit Infineum SV 200, 250 und 260. Infineum SV 150 stellt ein Diblockpolymer dar. Die genannten Produkte sind frei Trägerölen oder- lösungsmitteln. Insbesondere die Sternpolymere wie das Infineum SV 200 sind äußerst vorteilhaft bezüglich Verdickungswirkung, Viskositätsindex und Scherstabilität.

Darüber hinaus können auch Polyalkyl(meth)acrylate (PAMA) zur Verbesserung des Viskositätsindexes (VI) eingesetzt werden. So beschreiben EP 0 621 293 und EP 0 699 694 der Röhm GmbH vorteilhafte Kammpolymeren. Eine weitere Verbesserung des VI kann gemäß der Lehre der WO 2007/025837 und der WO 2007/003238 der RohMax Additives durch das Einhalten von spezifischen Parametern erzielt werden. Eine Verbesserung des Kraftstoffverbrauchs wird in diesen Druckschriften nicht dargelegt.

Die US 5,565,130 beschreibt ebenfalls Kammpolymere, basierend auf Olefin-Copolymer-Makromonomeren, die als Additive verwendet werden können. Sie nennt jedoch keinen molaren Verzweigungsgrad. Weiterhin wird die Verwendung der Kammpolymere zur Verringerung des Kraftstoffverbrauchs in Fahrzeugen nicht beschrieben.

Vorteilhafte Eigenschaften bezüglich Rußdispergierung (Kolbensauberkeit), Verschleißschutz und Reibwertveränderung in Motorenölen können bei der konventionellen PAMA-Chemie durch Pfropfen von N-Vinyl-Verbindungen (meist N-VinylPyrrolidon) auf PAMA-Basispolymere eingestellt werden (DE 1 520 696 der Röhm und Haas und WO 2006/007934 der RohMax Additives). VISCOPLEX® 6-950 ist ein solches PAMA, das kommerziell von der RohMax Additives, Darmstadt/Deutschland erhältlich ist.

Die zuvor dargelegten Ansätze führen bereits zu einer Verringerung des Kraftstoffverbrauchs. Allerdings besteht das dauerhafte Bestreben, den Kraftstoffverbrauch weiter zu verbessern.

In Anbetracht des Standes der Technik war es nun Aufgabe der vorliegenden Erfindung, ein Additiv zur Verfügung zu stellen, das zu einer Verringerung des Kraftstoffverbrauchs führt. Hierbei sollte diese Verringerung des Kraftstoffverbrauchs bei verschiedenen Testverfahren erzielt werden können, die im Allgemeinen ein unterschiedliches Fahrverhalten berücksichtigen. Dementsprechend sollte das Additiv zu Schmierölen mit einer geringen kinematische $KV_{40}$ als auch einer geringen Hochscherviskosität $HTHS_9$ mit 9=70, 80, 90 oder 100°C, d.h. die $HTHS_9$ soll möglichst wenig höher sein als die $HTHS_{150}$, führen.

Eine weitere Aufgabe der Erfindung bestand darin, Additive bereitzustellen, die einfach und kostengünstig hergestellt werden können, wobei insbesondere kommerziell erhältliche Komponenten eingesetzt werden sollten. Hierbei sollte die Produktion großtechnisch erfolgen können, ohne dass hierzu neue oder konstruktiv aufwendige Anlagen benötigt werden.

Gelöst werden diese sowie weitere nicht explizit genannten Aufgaben, die jedoch aus den hierin einleitend diskutierten Zusammenhängen ohne weiteres ableitbar oder erschließbar sind, durch die Verwendung von Kammpolymeren als auch durch die Verwendung einer Schmierölzusammensetzung enthaltend das Kammpolymer mit allen Merkmalen der Patentansprüche 1 und 20. Eine besonders vorteilhafte Lösung bieten die in Anspruch 3 dargelegten Kammpolymere.

Zweckmäßige Abwandlungen der erfindungsgemäßen Verwendung sind in den Unteransprüchen unter Schütz gestellt.

Gegenstand der vorliegenden Erfindung ist dementsprechend die Verwendung von Kammpolymeren umfassend in der Hauptkette Wiederholungseinheiten, die von Polyolefin-basierten Makromonomeren abgeleitet sind, und Wiederholungseinheiten, die von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleaten mit 1 bis 10 Kohlenstoffatomen in der Alkoholgruppe sowie Mischungen dieser Monomeren abgeleitet sind, wobei der molare Verzweigungsgrad im Bereich von 0,3 bis 3,6 Mol.-% liegt und das Kammpolymer in Summe mindestens 80 Gew.-%, bezogen auf das Gewicht der Wiederholungseinheiten, an Wiederholungseinheiten, die von Polyolefin-basierten Makromonomeren abgeleitet sind, und Wiederholungseinheiten, die von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleaten mit 1 bis 10 Kohlenstoffatomen in der Alkoholgruppe sowie Mischungen dieser Monomeren abgeleitet sind, umfasst, zur Verringerung des Kraftstoffverbrauchs von Fahrzeugen.

Hierdurch gelingt es auf nicht vorhersehbare Weise Additive für Schmieröle zur Verfügung zu stellen, die zu einer Verringerung des Kraftstoffverbrauchs von Fahrzeugen führen. Hierbei kann diese Verringerung des Kraftstoffverbrauchs bei unterschiedlichen Fahrweisen, d.h. bei verschiedensten Anforderungen erzielt werden. Dementsprechend führt das Additiv in Schmierölen zu einer geringen kinematische $KV_{40}$ und zu einer geringen Hochscherviskosität $HTHS_9$ mit 9=70, 80, 90 oder 100°C, d.h. die $HTHS_9$ ist nur geringfügig höher als die $HTHS_{150}$.

Weiterhin zeigen die Kammpolymere ein besonders günstiges Eigenschaftsprofil. So sind die Kammpolymere überraschend scherstabil, so dass die Schmiermittel eine sehr lange Haltbarkeit aufweisen. Darüber hinaus sind die vorliegenden Kammpolymere mit vielen Additiven kompatibel. Hierdurch können die Schmiermittel an verschiedenste Anforderungen angepasst werden. Beispielsweise können Schmiermittel mit hervorragenden Tieftemperatureigenschaften hergestellt werden, die die vorliegenden Kammpolymere aufweisen.

Darüber hinaus können die Kammpolymere einfach und kostengünstig hergestellt werden, wobei insbesondere kommerziell erhältliche Komponenten eingesetzt werden können. Weiterhin können die Kammpolymere großtechnisch hergestellt werden, ohne dass hierzu neue oder konstruktiv aufwendige Anlagen benötigt werden.

Der hierin verwendete Begriff Kammpolymer ist an sich bekannt, wobei an eine polymere Hauptkette, häufig auch Rückgrat oder "backbone" genannt, längere Seitenketten gebunden sind. Im vorliegenden Fall weisen die erfindungsgemäßen Polymere mindestens eine Wiederholungseinheit auf, die von Polyolefin-basierten Makromonomeren abgeleitet ist. Der genaue Anteil ergibt sich über den molaren Verzweigungsgrad. Der Begriff "Hauptkette" bedeutet nicht zwangsläufig, dass die Kettenlänge der Hauptkette größer ist als die der Seitenketten. Vielmehr bezieht sich dieser Begriff auf die Zusammensetzung dieser Kette. Während die Seitenkette sehr hohe Anteile an olefinischen Wiederholungseinheiten, insbesondere Einheiten, die von Alkenen oder Alkadienen, beispielsweise Ethylen, Propylen, n-Buten, Isobuten, Butadien, Isopren abgeleitet sind, aufweisen, umfasst die Hauptkette größere Anteile an polareren ungesättigten Monomeren, die zuvor dargelegt wurden.

Der Begriff Wiederholungseinheit ist in der Fachwelt weithin bekannt. Die vorliegenden Kammpolymere können vorzugsweise über radikalische Polymerisation von Makromonomeren und niedermolekularen Monomeren erhalten werden. Hierbei werden Doppelbindungen unter Bildung von kovalenten Bindungen geöffnet. Dementsprechend ergibt sich die Wiederholungseinheit aus den eingesetzten Monomeren. Allerdings können die vorliegenden Kammpolymere auch durch polymeranaloge Umsetzungen und/oder Pfropfcopolymerisation erhalten werden. In diesem Fall zählt die umgesetzte Wiederholungseinheit der Hauptkette zur Wiederholungseinheit, die von einem Polyolefin-basierten Makromonomeren abgeleitet ist. Ähnliches gilt bei der Herstellung der erfindungsgemäßen Kammpolymeren durch Pfropfcopolymerisation.

Die vorliegende Erfindung beschreibt die Verwendung von Kammpolymeren, die vorzugsweise eine hohe Öllöslichkeit aufweisen. Der Begriff öllöslich bedeutet, dass eine Mischung von einem Grundöl und einem Kammpolymer ohne makroskopische Phasenbildung herstellbar ist, die mindestens 0,1 Gew.-%, vorzugsweise mindestens 0,5 Gew.-% der Kammpolymere aufweist. In dieser Mischung kann das Kammpolymer dispergiert und/oder gelöst vorliegen. Die Öllöslichkeit hängt insbesondere vom Anteil der lipophilen Seitenketten sowie vom Grundöl ab. Diese Eigenschaft ist dem Fachmann bekannt und kann für das jeweilige Grundöl leicht über den Anteil an lipophilen Monomeren eingestellt werden.

Die Kammpolymere umfassen Wiederholungseinheiten, die von Polyolefin-basierten Makromonomeren abgeleitet sind. Polyolefin-basierte Makromonomere sind in der Fachwelt bekannt. Diese Wiederholungseinheiten umfassen mindestens eine Gruppe, die von Polyolefinen abgeleitet ist. Polyolefine sind in der Fachwelt bekannt, wobei diese durch Polymerisation von Alkenen und/oder Alkadienen, die aus den Elementen Kohlenstoff und Wasserstoff bestehen, beispielsweise $C_2$-$C_{10}$-Alkene wie Ethylen, Propylen, n-Buten, Isobuten, Norbornen und/oder $C_4$-$C_{10}$-Alkadiene wie Butadien, Isopren, Norbornadien, erhalten werden können. Die von Polyolefin-basierten Makromonomeren abgeleiteten Wiederholungseinheiten umfassen vorzugsweise mindestens 70 Gew.-% und besonders bevorzugt mindestens 80 Gew.-% und ganz besonders bevorzugt mindestens 90 Gew.-% an Gruppen die von Alkenen und/oder Alkadienen abgeleitet sind, bezogen auf das Gewicht der von Polyolefin-basierten Makromonomeren abgeleiteten Wiederholungseinheiten. Hierbei können die polyolefinischen Gruppen insbesondere auch hydriert vorliegen. Neben den Gruppen, die von Alkenen und/oder Alkadienen abgeleitet sind, können die von Polyolefin-basierten Makromonomeren abgeleiteten Wiederholungseinheiten weitere Gruppen umfassen. Hierzu gehören geringe Anteile an copolymerisierbaren Monomeren. Diese Monomeren sind an sich bekannt und umfassen unter anderem Alkyl(meth)acrylate, Styrolmonomere, Fumarate, Maleate, Vinylester und/oder Vinylether. Der Anteil dieser auf copolymerisierbaren Monomeren basierten Gruppen beträgt vorzugsweise höchstens 30 Gew.-%, besonders bevorzugt höchstens 15 Gew.-%, bezogen auf das Gewicht der von Polyolefin-basierten Makromonomeren abgeleiteten Wiederholungseinheiten. Des Weiteren können die von Polyolefin-basierten Makromonomeren abgeleiteten Wiederholungseinheiten Anfangsgruppen und/oder Endgruppen umfassen, die zur Funktionalisierung dienen oder durch die Herstellung der von Polyolefin-basierten Makromonomeren abgeleiteten Wiederholungseinheiten bedingt sind. Der Anteil dieser Anfangsgruppen und/oder Endgruppen beträgt vorzugsweise höchstens 30 Gew.-%, besonders bevorzugt höchstens 15 Gew.-%, bezogen auf das Gewicht der von Polyolefin basierten Makromonomeren abgeleiteten Wiederholungseinheiten.

Vorzugsweise liegt das Zahlenmittel des Molekulargewicht der Wiederholungseinheiten, die von Polyolefin-basierten Makromonomeren abgeleitet sind, im Bereich von 500 bis 50000 g/mol, besonders bevorzugt 700 bis 10000 g/mol, insbesondere 1500 bis 4900 g/mol und ganz besonders bevorzugt 2000 bis 3000 g/mol.

Diese Werte ergeben sich im Falle der Herstellung der Kammpolymere durch Copolymerisation von niedermolekularen und makromolekularen Monomeren über die Eigenschaften der makromolekularen Monomeren. Im Falle der polymeranalogen Umsetzungen ergibt sich diese Eigenschaft beispielsweise aus den eingesetzten Makroalkoholen und/oder Makroaminen unter Berücksichtigung der umgesetzten Wiederholungseinheiten der Hauptkette. Im Falle der Pfropfcopolymerisationen kann über den Anteil an gebildeten Polyolefinen, der nicht in die Hauptkette eingebaut wurde, auf die Molekulargewichtsverteilung des Polyolefins geschlossen werden.

Die Wiederholungseinheiten, die von Polyolefin-basierten Makromonomeren abgeleitet sind, weisen vorzugsweise eine niedrige Schmelztemperatur auf, wobei diese über DSC gemessen wird. Bevorzugt ist die Schmelztemperatur der von den Polyolefin-basierten Makromonomeren abgeleiteten Wiederholungseinheiten kleiner oder gleich -10°C, insbesondere bevorzugt kleiner oder gleich -20°C, besonders bevorzugt kleiner oder gleich -40°C. Ganz besonders bevorzugt kann keine Schmelztemperatur gemäß DSC bei den Wiederholungseinheiten, die von den Polyolefin-basierten Makromonomeren abgeleitet sind, gemessen werden.

Neben den Wiederholungseinheiten, die von den Polyolefin-basierten Makromonomeren abgeleitet sind, umfassen die Kammpolymere Wiederholungseinheiten, die von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleaten mit 1 bis 10 Kohlenstoffatomen in der Alkoholgruppe sowie Mischungen dieser Monomeren abgeleitet sind. Diese Monomeren sind in der Fachwelt weithin bekannt.

Der Ausdruck "niedermolekular" verdeutlicht, dass ein Teil der Wiederholungseinheiten des Rückgrats des Kammpolymeren ein geringes Molekulargewicht aufweist. Dies Molekulargewicht kann sich, je nach Herstellung, aus dem Molekulargewicht der zur Herstellung der Polymeren verwendeten Monomeren ergeben. Das Molekulargewicht der niedermolekularen Wiederholungseinheiten bzw. der niedermolekularen Monomeren beträgt vorzugsweise höchstens 400 g/mol, besonders bevorzugt höchstens 200 g/mol und ganz besonders bevorzugt höchstens 150 g/mol.

Beispiele für Styrolmonomere mit 8 bis 17 Kohlenstoffatomen sind Styrol, substituierte Styrole mit einem Alkylsubstituenten in der Seitenkette, wie z. B. $\alpha$-Methylstyrol und $\alpha$-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole.

Der Begriff "(Meth)acrylate" umfasst Acrylate und Methacrylate sowie Mischungen von Acrylaten und Methacrylaten. Zu den Alkyl(meth)acrylaten mit 1 bis 10 Kohlenstoffatomen in der Alkoholgruppe gehören insbesondere (Meth)acrylate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, tert-Butyl(meth)acrylat, Pentyl(meth)acrylat, Hexyl(meth)acrylat, 2-Ethylhexyl(meth)acrylat, Heptyl(meth)acrylat, 2-tert.-Butylheptyl(meth)acrylat, Octyl(meth)acrylat, 3-iso-Propylheptyl(meth)acrylat, Nonyl(meth)acrylat, Decyl(meth)acrylat; (Meth)acrylate, die sich von ungesättigten Alkoholen ableiten, wie z. B. 2-Propinyl(meth)acrylat, Allyl(meth)acrylat, Vinyl(meth)acrylat, Oleyl(meth)acrylat; Cycloalkyl(meth)acrylate, wie Cyclopentyl(meth)acrylat, 3-Vinylcyclohexyl(meth)acrylat.

Bevorzugte Alkyl(meth)acrylate umfassen 1 bis 8, besonders bevorzugt 1 bis 4 Kohlenstoffatomen in der Alkoholgruppe. Die Alkoholgruppe kann hierbei linear oder verzweigt sein.

Beispiele für Vinylester mit 1 bis 11 Kohlenstoffatomen in der Acylgruppe sind unter anderem Vinylformiat, Vinylacetat, Vinylpropionat, Vinylbutyrat, Bevorzugte Vinylester umfassen 2 bis 9, besonders bevorzugt 2 bis 5 Kohlenstoffatomen in der Acylgruppe. Die Acylgruppe kann hierbei linear oder verzweigt sein.

Beispiele für Vinylether mit 1 bis 10 Kohlenstoffatomen in der Alkoholgruppe sind unter anderem Vinylmethylether, Vinylethylether, Vinylpropylether, Vinylbutylether. Bevorzugte Vinylether umfassen 1 bis 8, besonders bevorzugt 1 bis 4 Kohlenstoffatomen in der Alkoholgruppe. Die Alkoholgruppe kann hierbei linear oder verzweigt sein.

Die Schreibweise (Di)ester bedeutet, dass Monoester, Diester sowie Mischungen von Estern, insbesondere der Fumarsäure und/oder der Maleinsäure eingesetzt werden können. Zu den (Di)alkylfumaraten mit 1 bis 10 Kohlenstoffatomen in der Alkoholgruppe gehören unter anderem Monomethylfumarat, Dimethylfumarat, Monoethylfumarat, Diethylfumarat, Methylethylfumarat, Monobutylfumarat, Dibutylfumarat, Dipentylfumarat und Dihexylfumarat. Bevorzugte (Di)alkylfumarate umfassen 1 bis 8, besonders bevorzugt 1 bis 4 Kohlenstoffatomen in der Alkoholgruppe. Die Alkoholgruppe kann hierbei linear oder verzweigt sein.

Zu den (Di)alkylmaleaten mit 1 bis 10 Kohlenstoffatomen in der Alkoholgruppe gehören unter anderem Monomethylmaleat, Dimethylmaleat, Monoethylmaleat, Diethylmaleat, Methylethylmaleat, Monobutylmaleat, Dibutylmaleat. Bevorzugte (Di)alkylmaleate umfassen 1 bis 8, besonders bevorzugt 1 bis 4 Kohlenstoffatomen in der Alkoholgruppe. Die Alkoholgruppe kann hierbei linear oder verzweigt sein.

Neben den zuvor dargelegten Wiederholungseinheiten können die erfindungsgemäßen Kammpolymere weitere Wiederholungseinheiten umfassen, die von weiteren Comonomeren abgeleitet sind, wobei deren Anteil höchstens 20 Gew.-%, bevorzugt höchstens 10 Gew.-% und besonders bevorzugt höchstens 5 Gew.-%, bezogen auf das Gewicht der Wiederholungseinheiten, beträgt.

Hierzu gehören unter anderem auch Wiederholungseinheiten, die von Alkyl(meth)acrylaten mit 11 bis 30 Kohlenstoffatomen in der Alkoholgruppe abgeleitet sind, insbesondere Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Methylhexadecyl(meth)acrylat, Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat. Hierzu gehören unter anderem auch Wiederholungseinheiten, die von dispergierenden sauerstoff- und stickstoff-funktionalisierten Monomeren abgeleitet sind, wie im Folgenden beispielhaft aufgezählt:

Dazu gehören unter anderem Wiederholungseinheiten, die von
Aminoalkyl(meth)acrylaten abgeleitet sind, wie
N,N-Dimethylaminoethyl(meth)acrylat,
N,N-Dimethylaminopropyl(meth)acrylat,
N,N-Diethylaminopentyl(meth)acrylat,
N,N-Dibutylaminohexadecyl(meth)acrylat.

Dazu gehören unter anderem Wiederholungseinheiten, die von
Aminoalkyl(meth)acrylamiden abgeleitet sind, wie
N,N-Dimethylaminopropyl(meth)acrylamid.

Dazu gehören unter anderem Wiederholungseinheiten, die von

Hydroxylalkyl(meth)acrylaten abgeleitet sind, wie
3-Hydroxypropyl(meth)acrylat,
3,4-Dihydroxybutyl(meth)acrylat,
2-Hydroxyethyl (meth)acrylat,
2-Hydroxypropyl(meth)acrylat,
2,5-Dimethyl-1,6-hexandiol(meth)acrylat,
1,10-Decandiol(meth)acrylat.

Dazu gehören unter anderem Wiederholungseinheiten, die von heterocyclischen
(Meth)acrylaten abgeleitet sind, wie
2-((1-Imidazolyl)ethyl(meth)acrylat
2-((4-Morpholinyl)ethyl(meth)acrylat
1-((2-Methacryloyloxyethyl)-2-pyrrolidon,
N-Methacryloylmorpholin,
N-Methacryloyl-2-pyrrolidinon,
N-(2-Methacryloyloxyethyl)-2-pyrrolidinon,
N-(3-Methacryloyloxypropyl)-2-pyrrolidinon.

Dazu gehören unter anderem Wiederholungseinheiten, die von heterocyclischen Vinylverbindungen abgeleitet sind, wie 2-Vinylpyridin, 4-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, N-Vinylpyrrolidin, 3-Vinylpyrrolidin, N-Vinylcaprolactam, N-Vinylbutyrolactam, Vinyloxolan, Vinylfuran, Vinyloxazole und hydrierte Vinyloxazole.

Die zuvor genannten ethylenisch ungesättigten Monomere können einzeln oder als Mischungen eingesetzt werden. Es ist des Weiteren möglich, die Monomerzusammensetzung während der Polymerisation der Hauptkette zu variieren, um definierte Strukturen, wie beispielsweise Blockcopolymere oder Pfropfpolymere, zu erhalten.

Erfindungsgemäß zu verwendende Kammpolymere weisen einen molaren Verzweigungsgrad im Bereich von 0,3 Mol-% bis 3,6 Mol-%. Besondere Vorteile werden durch Kammpolymere erzielt deren Verzweigungsgrad im Bereich von 0.3% bis 1,1 Mol-%, vorzugsweise 0,4 bis 1,0 Mol-%, besonders bevorzugt 0,4 bis 0,6 Mol-% liegt. Der molare Verzweigungsgrad des Kammpolymeren $f_{branch}$ berechnet sich gemäß der Formel

$$f_{branch} = \frac{\sum_{a=1}^{A} n_a}{\sum_{a=1}^{A} n_a + \sum_{b=1}^{B} n_b}$$

mit

A = Typenzahl an Wiederholungseinheiten, die von Polyolefin-basierten Makromonomeren abgeleitet sind,

B = Typenzahl an Wiederholungseinheiten, die von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleate mit 1 bis 10 Kohlenstoffatomen in der Alkoholgruppe sowie Mischungen dieser Monomeren abgeleitet sind,

$n_a$ = Anzahl der Wiederholungseinheiten, die von Polyolefin-basierten Makromonomeren abgeleitet sind, vom Typ a im Kammpolymermolekül

$n_b$ = Anzahl der Wiederholungseinheiten, die von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleate mit 1 bis 10 Kohlenstoffatomen in der Alkoholgruppe sowie Mischungen dieser Monomeren abgeleitet sind, vom Typ b im Kammpolymermolekül

Der molare Verzweigungsgrad ergibt sich im Allgemeinen aus dem Verhältnis der eingesetzten Monomeren, falls das Kammpolymer durch Copolymerisation von niedermolekularen und makromolekularen Monomeren hergestellt wurde. Zur Berechnung kann hierbei das Zahlenmittel des Molekulargewichts des Makromonomeren eingesetzt werden.

Gemäß einem besonderen Aspekt der vorliegenden Erfindung kann das Kammpolymer, insbesondere die Hauptkette des Kammpolymers eine Glasübergangstemperatur im Bereich -60 bis 110°C, bevorzugt im Bereich -30 bis 100°C, besonders bevorzugt im Bereich 0 bis 90°C und ganz besonders bevorzugt im Bereich 20 bis 80°C aufweisen. Die Glasübergangstemperatur wird per DSC bestimmt. Die Glasübergangstemperatur kann über die Glastemperatur der entsprechenden Homopolymere unter Berücksichtung der Anteile der Wiederholungseinheiten in der Hauptkette abgeschätzt werden.

Falls das Kammpolymer durch polymeranaloge Umsetzung oder durch Pfropfcopolymerisation erhalten wurde, ergibt sich der molare Verzweigungsgrad über bekannte Methoden zur Bestimmung des Umsatzes.

Der Anteil von mindestens 80 Gew.-%, vorzugsweise mindestens 90 Gew.-% an niedermolekularen Wiederholungseinheiten, die von Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleate mit 1 bis 10 Kohlenstoffatomen in der Alkoholgruppe sowie Mischungen dieser Monomeren abgeleitet sind und von Wiederholungseinheiten, die von Polyolefin-basierten Makromonomeren abgeleitet sind, bezieht sich auf das Gewicht der Wiederholungseinheiten. Neben den Wiederholungseinheiten umfassen Polymere im Allgemeinen des weiteren Anfangs- und Endgruppen, die durch Initiierungsreaktionen und Abbruchreaktionen entstehen können. Gemäß einem besonderen Aspekt der vorliegenden Erfindung bezieht sich daher die Angabe von mindestens 80 Gew.-%, vorzugsweise mindestens 90 Gew.-% an niedermolekularen Wiederholungseinheiten, die von Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleate mit 1 bis 10 Kohlenstoffatomen in der Alkoholgruppe sowie Mischungen dieser Monomeren abgeleitet sind und von Wiederholungseinheiten, die von Polyolefin-basierten Makromonomeren abgeleitet sind, auf das Gesamtgewicht der Kammpolymeren. Das Kammpolymere weist bevorzugt 8 bis 30 Gew. %, besonders bevorzugt 10 bis 26 Gew. % an Wiederholungseinheiten auf, die von Polyolefin-basierten Makromonomeren abgeleitet sind, bezogen auf das Gesamtgewicht an Wiederholungseinheiten. Dem Fachmann ist die Polydispersität der Kammpolymere offensichtlich. Daher beziehen sich diese Angaben auf einen Mittelwert über alle Kammpolymere.

Von besonderem Interesse sind unter anderem Kammpolymere, die vorzugsweise ein gewichtsgemitteltes Molekulargewicht $M_w$ im Bereich von 50 000 bis 1 000 000 g/mol, besonders bevorzugt 100 000 bis 500 000 g/mol und ganz besonders bevorzugt 150 000 bis 450 000 g/mol aufweisen.

Das zahlengemittelte Molekulargewicht $M_n$ kann vorzugsweise im Bereich von 20 000 bis 800 000 g/mol, besonders bevorzugt 40 000 bis 200 000 g/mol und ganz besonders bevorzugt 50 000 bis 150 000 g/mol liegen.

Zweckmäßig sind darüber hinaus Kammpolymere, deren Polydispersitätsindex $M_w/M_n$ im Bereich von 1 bis 5, besonders bevorzugt im Bereich von 2,5 bis 4,5 liegt. Das zahlengemittelte und das gewichtsgemittelte Molekulargewicht können durch bekannte Verfahren, beispielsweise die Gelpermeationschromatographie (GPC) bestimmt werden.

Gemäß einer besonderen Ausgestaltung der vorliegenden Erfindung können die Kammpolymere insbesondere durch Pfropfen mit dispergierenden Monomeren modifiziert werden. Unter dispergierenden Monomeren werden insbesondere Monomere mit funktionellen Gruppen verstanden, durch die Partikel, insbesondere Russpartikel in Lösung gehalten werden können. Hierzu gehören insbesondere die zuvor dargelegten Monomere, die von sauerstoff- und stickstoff-funktionalisierten Monomeren, insbesondere von heterocyclischen Vinylverbindungen abgeleitet sind. Durch diese Ausführungsform können unter anderem vorteilhafte Eigenschaften bezüglich Rußdispergierung, Kolbensauberkeit und Verschleißschutz erzielt werden.

Die Kammpolymere können auf verschiedene Weise hergestellt werden. Ein bevorzugtes Verfahren besteht in der an sich bekannten radikalischen Copolymerisation von niedermolekularen Monomeren und makromolekularen Monomeren.

So können diese Polymere insbesondere durch radikalische Polymerisation, sowie verwandte Verfahren der kontrollierten radikalischen Polymerisation, wie beispielsweise ATRP (=Atom Transfer Radical Polymerisation) oder RAFT (=Reversible Addition Fragmentation Chain Transfer) erfolgen.

Die übliche freie radikalische Polymerisation ist u.a. in Ullmanns's Encyclopedia of Industrial Chemistry, Sixth Edition dargelegt. Im Allgemeinen werden hierzu ein Polymerisationsinitiator sowie ein Kettenüberträger eingesetzt. Zu den verwendbaren Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, tert-Butylperoctoat, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können. Als Kettenüberträger eignen sich insbesondere öllösliche Mercaptane wie beispielsweise n-Dodecylmercaptan oder 2-Mercaptoethanol oder auch Kettenüberträger aus der Klasse der Terpene, wie beispielsweise Terpinolen. Das ATRP-Verfahren ist an sich bekannt. Es wird angenommen, dass es sich hierbei um eine "lebende" radikalische Polymerisation handelt, ohne dass durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenische Gruppen addiert. Die Übertragung der Atomgruppe auf die Übergangsmetallverbindung ist jedoch reversibel, so dass die Atomgruppe auf die wachsende Polymerkette rückübertragen wird, wodurch ein kontrolliertes Polymerisationssystem gebildet wird. Dementsprechend kann der Aufbau des Polymeren, das Molekulargewicht und die Molekulargewichtsverteilung gesteuert werden.

Diese Reaktionsführung wird beispielsweise von J-S. Wang, et al., J.Am.Chem.Soc., vol.117, p.5614-5615 (1995), von Matyjaszewski, Macromolecules, vol.28, p.7901 - 7910 (1995) beschrieben. Darüber hinaus offenbaren die Patentanmeldungen WO 96/30421, WO 97/47661, WO 97/18247, WO 98/40415 und WO 99/10387 Varianten der zuvor erläuterten ATRP.

Des Weiteren können die Polymere beispielsweise auch über RAFT-Methoden erhalten werden. Dieses Verfahren ist beispielsweise in WO 98/01478 und WO 2004/083169 ausführlich dargestellt, worauf für Zwecke der Offenbarung ausdrücklich Bezug genommen wird.

Die Polymerisation kann bei Normaldruck, Unter- od. Überdruck durchgeführt werden. Auch die Polymerisationstemperatur ist unkritisch. Im Allgemeinen liegt sie jedoch im Bereich von -20°- 200°C, vorzugsweise 50°- 150°C und besonders bevorzugt 80 ° - 130 °C.

Die Polymerisation kann mit oder ohne Lösungsmittel durchgeführt werden. Der Begriff des Lösungsmittels ist hierbei weit zu verstehen. Die Auswahl des Lösungsmittels erfolgt nach der Polarität der eingesetzten Monomeren, wobei bevorzugt 100N-ÖI, leichteres Gasöl und/oder aromatische Kohlenwasserstoffe, beispielsweise Toluol oder Xylol eingesetzt werden können.

Die zur Herstellung der Kammpolymeren in einer radikalischen Copolymerisation einzusetzenden niedermolekularen Monomeren sind im Allgemeinen kommerziell erhältlich.

Die Makromonomere weisen genau eine Doppelbindung auf, die vorzugsweise endständig ist.

Hierbei kann die Doppelbindung durch die Herstellung der Makromonomeren bedingt vorhanden sein. So entsteht beispielsweise bei einer kationischen Polymerisation von Isobutylen ein Polyisobutylen (PIB), welches eine endständige Doppelbindung aufweist.

Des Weiteren können funktionalisierte polyolefinische Gruppen durch geeignete Umsetzungen in ein Makromonomer umgewandelt werden.

Beispielsweise können auf Polyolefinen basierende Makroalkohole und/oder Makroamine mit niedermolekularen Monomeren, die mindestens eine ungesättigte Estergruppe umfassen, wie beispielsweise Methyl(meth)acrylat oder Ethyl(meth)acrylat einer Umesterung oder Aminolyse unterworfen werden.

Diese Umesterung ist weithin bekannt. Beispielsweise kann hierfür ein heterogenes Katalysatorsystem, wie Lithiumhydroxid/Calciumoxid-Mischung (LiOH/CaO), reines Lithiumhydroxid (LiOH), Lithiummethanolat (LiOMe) oder Natriummethanolat (NaOMe) oder ein homogenes Katalysatorsystem wie das Isopropyltitanat (Ti(OiPr)$_4$) oder das Dioctylzinnoxid (Sn(Oct)$_2$O) eingesetzt werden. Die Umsetzung stellt eine Gleichgewichtsreaktion dar. Daher wird üblicherweise der freigesetzte niedermolekulare Alkohol beispielsweise durch Destillation entfernt.

Des Weiteren können diese Makromonomere durch eine direkte Veresterung oder direkte Amidierung ausgehend beispielsweise von Methacrylsäure oder Methacrylsäureanhydrid, bevorzugt unter saurer Katalyse durch p-Toluolsulfonsäure oder Methansulfonsäure oder aus der freien Methacrylsäure durch die DCC-Methode (Dicyclohexylcarbodiimid) erhalten werden.

Darüber hinaus kann der vorliegende Alkohol oder das Amid durch Umsatz mit einem Säurechlorid wie dem (Meth)acrylsäurechlorid in ein Makromonomeres überführt werden.

Weiterhin besteht auch die Möglichkeit, einen Makroalkohol über die Reaktion der endständigen PIB-Doppelbindung, wie sie bei kationisch polymerisiertem PIB entsteht, mit Maleinsäureanhydrid (EN-Reaktion) und nachfolgenden Umsatz mit einem $\alpha,\omega$-Aminoalkohol herzustellen.

Weiterhin können geeignete Makromonomere durch Umsetzung einer endständigen PIB-Doppelbindung mit Methacrylsäure oder durch eine Friedel-Crafts-Alkylierung der PIB-Doppelbindung an Styrol erhalten werden.

Bevorzugt werden bei den zuvor dargelegten Herstellungen der Makromonomere Polymerisationsinhibitoren wie z.B. das 4-Hydroxy-2,2,6,6-tetramethylpiperidino-oxyl-Radikal und/oder Hydrochinonmonomethylether eingesetzt.

Die für die zuvor dargelegten Reaktionen zu verwendenden auf Polyolefinen basierenden Makroalkohole und/oder Makroamine können auf bekannte Weise hergestellt werden.

Des Weiteren sind diese Makroalkohole und/oder Makroamine zum Teil kommerziell erhältlich.

Zu den kommerziell erhältlichen Makroaminen zählt beispielsweise Kerocom® PIBA 03. Kerocom® PIBA 03 ist ein zu etwa 75wt% $NH_2$-funktionalisiertes Polyisobutylen (PIB) von $M_n$=1000g/mol, welches als Konzentrat von etwa 65wt% in aliphatischen Kohlenwasserstoffen von der BASF AG (Ludwigshafen, Deutschland) geliefert wird.

Ein weiteres Produkt ist das Kraton Liquid® L-1203, ein zu etwa 98wt% OH-funktionalisiertes hydriertes Polybutadien (auch Olefincopolymer OCP genannt) mit etwa je 50% 1,2-Wiederholungseinheiten und 1,4-Wiederholungseinheiten von $M_n$=4200g/mol, der Kraton Polymers GmbH (Eschborn, Deutschland).

Weiterer Anbieter geeigneter Makroalkohole auf Basis von hydriertem Polybutadien ist Cray Valley (Paris) als Tochter der Total (Paris) bzw. der Sartomer Company (Exton/PA/USA).

Die Herstellung von Makroaminen ist beispielsweise in EP 0 244 616 der BASF AG dargelegt. Die Darstellung der Makroamine erfolgt dabei über Oxierung und Aminierung bevorzugt von Polyisobutylen. Polyisobutylen bietet den Vorteil, bei tiefen Temperaturen keine Kristallisation zu zeigen.

Vorteilhafte Makroalkohole können des Weiteren nach den bekannten Patenten der BASF AG entweder über Hydroborierung (WO 2004/067583) von hochreaktivem Polyisobutylen HR-PIB (EP 0 628 575), welches einen erhöhten Anteil an endständigen $\alpha$-Doppelbindungen enthält, oder durch Oxierung gefolgt von Hydrierung (EP 0 277 345) dargestellt werden. Die Hydroborierung liefert im Vergleich zur Oxierung und Hydrierung höhere Alkoholfunktionalitäten. Bevorzugte Makroalkohole auf Basis von hydrierten Polybutadienen können gemäß GB 2270317 der Shell Internationale Research Maatschappij erhalten werden. Ein hoher Anteil an 1,2-Wiederholungseinheiten von etwa 60% und mehr kann zu deutlich tieferen Kristallisationstemperaturen führen.

Die zuvor dargelegten Makromonomere sind zum Teil auch kommerziell erhältlich, wie zum Beispiel das aus dem Kraton Liquid® L-1203 hergestellte Kraton Liquid® L-1253, ein zu etwa 96wt% Methacrylat-funktionalisiertes hydriertes Polybutadien mit etwa je 50% 1,2-Wiederholungseinheiten und 1,4-Wiederholungseinheiten, der Kraton Polymers GmbH (Eschborn, Deutschland).

Die Synthese des Kraton® L-1253 erfolgte nach GB 2270317 der Shell Internationale Research Maatschappij.

Auf Polyolefinen basierende Makromonomere und deren Herstellung sind auch in EP 0 621 293 und EP 0 699 694 dargelegt.

Neben einer zuvor dargelegten radikalischen Copolymerisation von Makromonomeren und niedermolekularen Monomeren können die Kammpolymere durch polymeranaloge Umsetzungen erhalten werden.

Hierbei wird zunächst auf bekannte Weise ein Polymer aus niedermolekularen Monomeren hergestellt, welches anschließend umgesetzt wird. Hierbei kann das Rückgrat eines Kammpolymeren aus einem reaktiven Monomeren wie Maleinsäureanhydrid, Methacrylsäure oder aber Glycidylmethacrylat und anderen inreaktiven kurzkettigen Rückgratmonomeren synthetisiert werden. Hierbei können die zuvor dargelegten Initiatorsysteme wie t-Butylperbenzoat oder t-Butyl-per-2-ethylhexanoat und Regler wie n-Dodecylmercaptan Verwendung finden.

In einem weiteren Schritt können, beispielsweise in einer Alkoholyse oder Aminolyse, die Seitenketten, welche auch als Arme bezeichnet werden, generiert werden. Hierbei können die zuvor dargelegten Makroalkohole und/oder Makroamine eingesetzt werden.

Die Umsetzung des zunächst gebildeten Rückgratpolymeren mit Makroalkoholen und/oder Makroaminen entspricht im Wesentlichen den zuvor dargelegten Umsetzungen der Makroalkohole und/oder Makroamine mit niedermolekularen Verbindungen.

So können die Makroalkohole und/oder Makroamine auf an sich bekannte Pfropfreaktionen beispielsweise an die vorliegenden Maleinsäureanhydrid- oder Methacrylsäure-Funktionalitäten im Rückgratpolymeren unter Katalyse z.B. durch p-Toluolsulfonsäure oder Methansulfonsäure zu Estern, Amiden oder Imiden zu den Kammpolymere umgesetzt werden. Durch Zugabe von niedermolekularen Alkoholen und/oder Aminen wie n-Butanol oder N-(3-Aminopropyl)-morpholin wird diese polymeranloge Reaktion insbesondere bei Maleinsäureanhydrid-Rückgraten zu vollständigen Umsätzen geführt.

Bei Glycidylfunktionalitäten im Rückgrat kann eine Addition des Makroalkohols und/oder des Makroamins durchgeführt werden, so dass Kammpolymere entstehen.

Des Weiteren können die Makroalkohole und/oder die Makroamine durch eine polymeranaloge Alkoholyse oder Aminolyse mit einem Rückgrat, das kurzkettige Esterfunktionalitäten enthält, umgesetzt werden, um Kammpolymere zu generieren.

Neben der Umsetzung des Rückgratpolymeren mit makromolekularen Verbindungen können geeignet funktionalisierte Polymere, die durch Umsetzung von niedermolekularen Monomeren erhalten wurden, mit weiteren niedermolekularen Monomeren unter Bildung von Kammpolymeren umgesetzt werden. Hierbei weist das zunächst hergestellte Rückgratpolymere mehrere Funktionalitäten auf, die als Initiatoren von multiplen Pfropfpolymerisationen dienen.

So kann eine multiple kationische Polymerisation von i-Buten initiiert werden, die zu Kammpolymeren mit Polyolefin-Seitenarmen führt. Geeignet sind für derartige Pfroftcopolymerisationen auch die zuvor dargelegten ATRP- und/oder RAFT-Verfahren, um Kammpolymere mit einer definierter Architektur zu erhalten.

Das Kammpolymer weist gemäß einem besonderen Aspekt der vorliegenden Erfindung einen geringen Anteil an olefinischen Doppelbindungen auf. Vorzugsweise ist die Jodzahl kleiner oder gleich 0.2 g pro g Kammpolymer, besonders bevorzugt kleiner oder gleich 0.1 g pro g Kammpolymer. Dieser Anteil kann gemäß DIN 53241 nach 24stündigem Abziehen von Trägeröl und niedermolekularen Restmonomeren bei 180°C im Vakuum bestimmt werden.

Zweckmäßig kann das Kammpolymere Wiederholungseinheiten aufweisen, die von n-Butylmethacrylat und/ oder von n-Butylacrylat abgeleitet sind. Mit besonderem Vorteil kann der Anteil an Wiederholungseinheiten, die von n-Butylmethacrylat und/oder von n-Butylacrylat abgeleitet sind, bevorzugt mindestens 50 Gew.-%, besonders bevorzugt mindestens 60 Gew.-% betragen, bezogen auf das Gesamtgewicht an Wiederholungseinheiten.

Gemäß einer bevorzugten Abwandlung der vorliegenden Erfindung kann das Kammpolymere Wiederholungseinheiten aufweisen, die von Styrol abgeleitet sind. Bevorzugt kann der Anteil an Wiederholungseinheiten, die von Styrol abgeleitet sind, im Bereich von 0,1 bis 30 Gew.-%, besonders bevorzugt 5 bis 25 Gew.-% liegen.

Überraschende Vorteile können insbesondere Kammpolymere zeigen, die Wiederholungseinheiten aufweisen, die von Alkyl(meth)acrylaten mit 11-30 Kohlenstoffatomen im Alkylrest abgeleitet sind. Zweckmäßig kann der Anteil an Wiederholungseinheiten, die von Alkyl(meth)acrylaten mit 11 bis 30 Kohlenstoffatomen im Alkylrest abgeleitet sind, im Bereich von 0,1 bis 15 Gew.-%, besonders bevorzugt 1 bis 10 Gew.-% liegen.

Gemäß einem besonderen Aspekt der vorliegenden Erfindung weist das Kammpolymer vorzugsweise Wiederholungseinheiten, die von Styrol abgeleitet sind, und Wiederholungseinheiten auf, die von n-Butylmethacrylat abgeleitet sind. Vorzugsweise liegt das Gewichtsverhältnis von Styrol-Wiederholungseinheiten und n-Butylmethacrylat-Wiederholungseinheiten im Bereich von 1:1 bis 1:9, besonders bevorzugt 1:2 bis 1:8.

Gemäß einer weiteren bevorzugten Ausführungsform der vorliegenden Erfindung weist das Kammpolymer vorzugsweise Wiederholungseinheiten, die von Styrol abgeleitet sind, und Wiederholungseinheiten auf, die von n-Butylacrylat abgeleitet sind. Vorzugsweise liegt das Gewichtsverhältnis von Styrol-Wiederholungseinheiten und n-Butylacrylat-Wiederholungseinheiten im Bereich von 1:1 bis 1:9, besonders bevorzugt 1:2 bis 1:8.

Nach einem weiteren bevorzugten Gesichtspunkt der vorliegenden Erfindung weist das Kammpolymer vorzugsweise Wiederholungseinheiten, die von Methylmethacrylat abgeleitet sind, und Wiederholungseinheiten auf, die von n-Butylmethacrylat abgeleitet sind. Vorzugsweise liegt das Gewichtsverhältnis von Methylmethacrylat-Wiederholungseinheiten und n-Butylmethacrylat-Wiederholungseinheiten im Bereich von 1:1 bis 0:100, besonders bevorzugt 3: 7 bis 0:100.

Vorzugsweise kann das erfindungsgemäße Kammpolymer in einer Schmierölzusammensetzung eingesetzt werden. Eine Schmierölzusammensetzung umfasst mindestens ein Schmieröl.

Zu den Schmierölen gehören insbesondere Mineralöle, synthetische Öle und natürliche Öle.

Mineralöle sind an sich bekannt und kommerziell erhältlich. Sie werden im Allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Roh- oder Erdöls fallen. Im Allgemeinen liegt der Siedepunkt von Mineralöl höher.als 200 °C, vorzugsweise höher als 300 °C, bei 5000 Pa. Die Herstellung durch Schwelen von Schieferöl, Verkoken von Steinkohle, Destillation unter Luftabschluss von Braunkohle sowie Hydrieren von Stein- oder Braunkohle ist ebenfalls möglich. Dementsprechend weisen Mineralöle, je nach Herkunft unterschiedliche Anteile an aromatischen, cyclischen, verzweigten und linearen Kohlenwasserstoffen auf.

Im Allgemeinen unterscheidet man paraffinbasische, naphthenische und aromatische Anteile in Rohölen bzw. Mineralölen, wobei die Begriffe paraffinbasischer Anteil für längerkettig bzw. stark verzweigte iso-Alkane und naphtenischer Anteil für Cycloalkane stehen. Darüber hinaus weisen Mineralöle, je nach Herkunft und Veredelung unterschiedliche Anteile an n-Alkanen, iso-Alkanen mit einem geringen Verzweigungsgrad, sogenannte monomethylverzweigten Paraffine, und Verbindungen mit Heteroatomen, insbesondere O, N und/oder S auf, denen bedingt polare Eigenschaften zugesprochen werden. Die Zuordnung ist jedoch schwierig, da einzelne Alkanmoleküle sowohl langkettig verzweigte Gruppen als auch Cycloalkanreste und aromatische Anteile aufweisen können. Für die Zwecke der vorliegenden Erfindung kann die Zuordnung beispielsweise gemäß DIN 51 378 erfolgen. Polare Anteile können auch gemäß ASTM D 2007 bestimmt werden.

Der Anteil der n-Alkane beträgt in bevorzugten Mineralölen weniger als 3 Gew.-%, der Anteil der O, N und/ oder S-haltigen Verbindungen weniger als 6 Gew.-%. Der Anteil der Aromaten und der monomethylverzweigten Paraffine liegt im Allgemeinen jeweils im Bereich von 0 bis 40 Gew.-%. Gemäß einem interssanten Aspekt umfaßt Mineralöl hauptsächlich naphtenische und paraffinbasische Alkane, die im allgemeinen mehr als 13, bevorzugt mehr als 18 und ganz besonders bevorzugt mehr als 20 Kohlenstoffatome aufweisen. Der Anteil dieser Verbindungen ist im Allgemeinen größer oder gleich 60 Gew.-%, vorzugsweise größer oder gleich 80 Gew.-%, ohne dass hierdurch eine Beschränkung erfolgen soll. Ein bevorzugtes Mineralöl enthält 0,5 bis 30 Gew.-% aromatische Anteile, 15 bis 40 Gew.-% naphthenische Anteile, 35 bis 80 Gew.-% paraffinbasische Anteile, bis zu 3 Gew.-% n-Alkane und 0,05 bis 5 Gew.-% polare Verbindungen, jeweils bezogen auf das Gesamtgewicht des Mineralöls.

Eine Analyse von besonders bevorzugten Mineralölen, die mittels herkömmlicher Verfahren, wie Harnstofftrennung und Flüssigkeitschromatographie an Kieselgel, erfolgte, zeigt beispielsweise folgende Bestandteile, wobei sich die Prozentangaben auf das Gesamtgewicht des jeweils eingesetzten Mineralöls beziehen: n-Alkane mit ca. 18 bis 31 C-Atome:

0,7 - 1,0%,
gering verzweigte Alkane mit 18 bis 31 C-Atome:
1,0 - 8,0%,
Aromaten mit 14 bis 32 C-Atomen:
0,4 - 10,7%,
Iso- und Cyclo-Alkane mit 20 bis 32 C-Atomen:
60,7- 82,4 %,
polare Verbindungen:
0,1 - 0,8 %,
Verlust:
6,9 - 19,4%.

Ein verbesserte Klasse an Mineralölen (reduzierter Schwefelgehalt, reduzierter Stickstoffgehalt, höherer Viskositätsindex, niedrigerer Stockpunkt) ist durch Wasserstoffbehandlung der Mineralöle gegeben (*hydro isomerization, hydro cracking, hydro treatment, hydro finishing*). Hierbei werden in Wasserstoffpräsenz im Wesentlichen aromatische Anteile reduziert und naphthenische Anteile aufgebaut. Wertvolle Hinweise hinsichtlich der Analyse von Mineralölen sowie eine Aufzählung von Mineralölen, die eine abweichende Zusammensetzung aufweisen, findet sich beispielsweise in Ullmanns Encyclopedia of Industrial Chemistry, 5th Edition on CD-ROM, 1997, Stichwort "lubricants and related products".

Synthetische Öle umfassen unter anderem organische Ester, beispielsweise Diester und Polyester, Polyalkylenglykole, Polyether, synthetische Kohlenwasserstoffe, insbesondere Polyolefine, von denen Polyalphaolefine (PAO) bevorzugt sind, Silikonöle und Perfluoralkylether. Darüber können synthetische Grundöle mit Herkunft aus *gas to liquid* (GTL), *coal to liquid* (CTL) oder *biomass to liquid* (BTL) Prozessen eingesetzt werden. Sie sind meist etwas teurer als die mineralischen Öle, haben aber Vorteile hinsichtlich ihrer Leistungsfähigkeit.

Natürliche Öle sind tierische oder pflanzliche Öle, wie beispielsweise Klauenöle oder Jojobaöle.

Basisöle für Schmierölformulierungen werden in Gruppen nach API (American Petroleum Institute) eingeteilt. Mineralöle werden unterteilt in Gruppe I (nicht Wasserstoff-behandelt) und, abhängig von Sättigungsgrad, Schwefelgehalt und Viskositätsindex, in die Gruppen II und III (beide Wasserstoff-behandelt). PAOs entsprechen der Gruppe IV. Alle anderen Basisöle werden in Gruppe V zusammengefasst.

Diese Schmieröle können auch als Mischungen eingesetzt werden und sind vielfach kommerziell erhältlich.

Die Konzentration des Kammpolymeren in der Schmierölzusammensetzung liegt im Bereich von 0,1 bis 40 Gew.-%, besonders bevorzugt im Bereich von 0,2 - 20 Gew.-% und ganz besonders bevorzugt im Bereich von 0,5 - 10 Gew.-%, bezogen auf das Gesamtgewicht der Zusammensetzung.

Neben den zuvor genannten Komponenten kann eine Schmierölzusammensetzung weitere Additive und Zusatzstoffe enthalten. Bevorzugte Additive können insbesondere auf einem linearen Polyalkyl(meth)acrylat mit 1 bis 30 Kohlenstoffatomen in der Alkoholgruppe basieren (PAMA). Zu diesen Additiven gehören unter anderem DI-Additive (Dispergiermittel, Detergentien, Entschäumer, Korrosionsinhibitoren, Antioxidationsmittel, Verschleißschutz- und Extremdruckadditive, Reibwertveränderer), Stockpunktverbesserer (besonders bevorzugt auf Basis von Polyalkyl(meth) acrylat mit 1 bis 30 Kohlenstoffatomen in der Alkoholgruppe), und/oder Farbstoffe.

Darüber hinaus können die hier dargelegten Schmierölzusammensetzungen neben den erfindungsgemäßen Kammpolymeren auch in Mischungen mit konventionellen VI-Verbesserern vorliegen. Zu diesen gehören insbesondere hydrierte Styrol-Dien-Copolymere (HSD, US 4 116 917, US 3 772 196 und US 4 788 316 der Shell Oil Company), insbesondere auf Basis von Butadien und Isopren, als auch Olefincoplymere (OCP, K. Marsden: "Literature Review of OCP Viscosity Modifiers", Lubrication Science 1 (1988), 265), insbesondere vom Typ Poly(ethylen-co-propylen), welche oft auch N/O-funktionell mit Dispergierwirkung vorliegen können, oder PAMA, welche meist N-funktionell mit vorteilhaften Zusatzeigenschaften (*booster*) als Dispergiermittel, Verschleißschutzadditiv und/oder Reibwertveränderer vorliegen (DE 1 520 696 der Röhm und Haas, WO 2006/007934 der RohMax Additives).

Zusammenstellungen von VI-Verbesserern und Stockpunktverbesserern für Schmieröle, insbesondere Motorenöle sind beispielsweise in T. Mang, W. Dresel (eds.): "Lubricants and Lubrication", Wiley-VCH, Weinheim 2001; R.M. Mortier, S.T. Orszulik (eds.): "Chemistry and Technology of Lubricants", Blackie Academic & Professional, London 1992; oder J. Bartz: "Additive für Schmierstoffe", Expert-Verlag, Renningen-Malmsheim 1994 dargelegt.

Zweckmäßige Dispergiermittel (*dispersant*) umfassen unter anderem Poly(isobutylen)-Derivate, z.B. Poly(isobutylene)-Succinimide (PIBSI); Ethylen-Propylen-Oligomere mit N/O-Funktionalitäten.

Zu den bevorzugten Detergentien (*detergent*) gehören unter anderem Metalenthaltende Verbindungen, wie zum Beispiel Phenolate; Salicylate; Thiophosphonate, insbesondere Thiopyrophosphonate, Thiophosphonate und Phosphonate; Sulfonate und Carbonate. Als Metal können diese Verbindungen insbesondere Calcium, Magnesium und Barium enthalten. Diese Verbindungen können bevorzugt neutral oder überbasisch eingesetzt werden.

Von besonderem Interesse sind des Weiteren Entschäumer (defoamer), wobei diese vielfach in Silicon-haltige und Silicon-freie Entschäumer unterteilt werden. Zu den Silicon-haltigen Antischaummittel zählen unter anderem lineares Poly(dimethylsiloxan) und cyclisches Poly(dimethylsiloxan). Als Silicon-freie Entschäumer können vielfach Polyether, z.B. Poly(ethylenglycol) oder Tributylphosphat eingesetzt werden.

Gemäß einer besonderen Ausgestaltung können die erfindungsgemäßen Schmierölzusammensetzungen Korrosionsinhibitoren (corrosion inhibitor) umfassen. Diese werden vielfach unterteilt in Rostschutzadditive (antirust additive) und Metallpassivatoren/-desaktivatoren (metal passivator/desactivator). Als Rostschutzadditive können unter anderem Sulfonate, wie zum Beispiel Petroleumsulfonate oder (vielfach überbasische) synthetische Alkylbenzolsulfonate, z.B. Dinonylnaphthensulfonat; Carbonsäurederivate, wie zum Beispiel Lanolin (Wollfett), oxidierte Paraffine, Zinknaphthenate, akylierte Succinsäuren, 4-Nonylphenoxyessigsäure, Amide und Imide (N-Acylsarcosin, Imidazolinderivate); Aminneutralisierte Mono- und Dialkylphosphorsäureester; Morpholin; Dicycylohexylamin oder Diethanolamin eingesetzt werden. Zu den Metallpassivatoren/-desaktivatoren zählen unter anderem Benzotriazol, Tolyltriazol, 2-Mercaptobenzothiazol, Dialkyl-2,5-dimercapto-1,3,4-thiadiazol; N,N'-Disalicylidenethylendiamin, N,N'-Disalicylidenpropylendiamin; Zink-dialkyldithiophosphate und Dialkyldithiocarbamate.

Eine weitere bevorzugte Gruppe von Additiven stellen Antioxidationsmittel (antioxidant) dar. Zu den Antioxidationsmittel gehören beispielsweise Phenole, wie zum Beispiel 2,6-Di-tert-butyl-phenol (2,6-DTB), butyliertes Hydroxytoluol (BHT), 2,6-Di-tert-butyl-4-methylphenol, 4,4'-Methylen-bis(2,6-di-tert-butylphenol); aromatische Amine, insbesondere alkylierte Diphenylamine, N-Phenyl-1-naphthylamin (PNA), polymeres 2,2,4-Trimethyldihydrochinon (TMQ); Verbindungen enthaltend Schwefel und Phosphor, wie zum Beispiel Metalldithiophospate, z.B. Zinkdithiophosphate (ZnDTP), "OOS-Triester" = Reaktionsprodukte von Dithiophosphorsäure mit aktivierten Doppelbindungen aus Olefinen, Cyclopentadien, Norbornadien, $\alpha$-Pinen, Polybuten, Acrylsäureestern, Maleinsäureestern (aschefrei bei Verbrennung); Organoschwefelverbindungen, wie zum Beispiel Dialkylsulfide, Diarylsulfide, Polysulfide, modifizierte Thiole, Thiophenderivate, Xanthate, Thioglycole, Thioaldehyde, schwefelenthaltende Carbonsäuren; heterocyclische Schwefel/Stickstoff-Verbindungen, insbesondere Dialkyldimercaptothiadiazole, 2-Mercaptobenzimidazole; Zink- und Methylen-bis(dialkyldithiocarbamat); Organophosphorverbindungen, wie zum Beispiel Triaryl- und Trialkylphosphite; Organokupferverbindungen sowie überbasische Calcium- und Magnesium-basierte Phenolate und Salicylate.

Zu den bevorzugten Verschleißschutz- (antiwear AW) und Extremdruckadditiven (extreme pressure EP) gehören unter anderem Phosphorverbindungen, wie zum Beispiel Trialkylphosphate, Triarylphosphate, z.B. Tricresylphosphat, Aminneutralisierte Mono- und Dialkylphosphorsäureester, Ethoxylierte Mono- und Dialkylphosphorsäureester, Phosphite, Phosphonate, Phosphine; Verbindungen mit Schwefel und Phosphor, wie zum Beispiel Metalldithiophospate, z.B. Zink-$C_{312}$dialkyl-dithiophosphate (ZnDTP), Ammonium-, Antimon-, Molybdän-, Bleidialkyldithiophosphate, "OOS-Triester" = Reaktionsprodukte von Dithiophosphorsäure mit aktivierten Doppelbindungen aus Olefinen, Cyclopentadien, Norbornadien, $\alpha$-Pinen, Polybuten, Acrylsäureestern, Maleinsäureestern, Triphenylphosphorothionat (TPPT); Verbindungen mit Schwefel und Stickstoff, wie zum Beispiel Zink-bis(amyldithiocarbamat) oder Methylen-bis(di-n-butyldithiocarbamat); Schwefelverbindungen mit elementarem Schwefel sowie $H_2S$ geschwefelte Kohlenwasserstoffe (Diisobutylen, Terpen); geschwefelte Glyceride und Fettsäureester; überbasische Sulfonate; Chlorverbindungen oder Feststoffe, wie Graphit oder Molybdändisulfid.

Eine weitere bevorzugte Gruppe von Additiven stellen Reibwertveränderer (friction modifier) dar. Als Reibwertveränderer können unter anderem mechanisch wirksame Verbindungen, wie zum Beispiel Molybdändisulfid, Graphit (auch fluoriert), Poly(trifluorethylen), Polyamid, Polyimid; Adsorptionsschichten bildende Verbindungen, wie zum Beispiel langkettige Carbonsäuren, Fettsäureester, Ether, Alkohole, Amine, Amide, Imide; Verbindungen, die durch tribochemische Reaktionen Schichten bilden, wie zum Beispiel gesättigte Fettsäuren, Phosphorsäure und Thiophosphorsäureester, Xanthogenate, geschwefelte Fettsäuren; Verbindungen, die polymerartige Schichten bilden, wie zum Beispiel ethoxylierte Dicarbonsäureteilester, Dialkylphthalsäureester, Methacrylate, ungesättigte Fettsäuren, geschwefelte Olefine oder organometallische Verbindungen, wie zum Beispiel Molybdänverbindungen (Molybdändithiophosphate und Molybdändithiocarbamate MoDTC) und ihre Kombinationen mit ZnDTP, Kupfer-haltige organische Verbindungen eingesetzt werden.

Einige der zuvor dargestellten Verbindungen können multiple Funktionen erfüllen. ZnDTP z.B. ist primär ein Verschleißschutzadditiv und Extremdruckadditiv, hat aber auch den Charakter eines Antioxidationsmittels und Korrosionsinhibitors (hier: Metallpassivator/-desaktivator).

Die zuvor dargelegten Additive sind ausführlicher unter anderem in T. Mang, W. Dresel (eds.): "Lubricants and Lubrication", Wiley-VCH, Weinheim 2001; R.M. Mortier, S.T. Orszulik (eds.): "Chemistry and Technology of Lubricants" dargelegt. Bevorzugte Schmierölzusammensetzungen weisen eine gemäß ASTM D 445 bei 40°C gemessenen Viskosität im Bereich von 10 bis 120 mm$^2$/s, besonders bevorzugt im Bereich von 22 bis 100 mm$^2$/s auf. Die bei 100°C gemessene kinematische Viskosität $KV_{100}$ beträgt vorzugsweise mindestens 5,5 mm$^2$/s, besonders bevorzugt mindestens 5,6 mm$^2$/s und ganz besonders bevorzugt mindestens 5,8 mm$^2$/s.

Gemäß einem besonderen Aspekt der vorliegenden Erfindung weisen bevorzugte Schmierölzusammensetzung einen gemäß ASTM D 2270 bestimmten Viskositätsindex im Bereich von 100 bis 400, besonders bevorzugt im Bereich 150 bis 350 und ganz besonders bevorzugt im Bereich von 175 bis 275 auf.

Von besonderem Interesse sind des Weiteren Schmierölzusammensetzungen, die eine bei 150°C gemessene Hochscherviskosität HTHS von mindestens 2,4 mPas, besonders bevorzugt mindestens 2,6 mPas aufweisen. Die bei 100°C gemessene Hochscherviskosität HTHS beträgt vorzugsweise höchstens 10 mPas, besonders bevorzugt höchstens 7 mPas und ganz besonders bevorzugt höchstens 5 mPas. Die Differenz der Hochscherviskositäten HTHS, die bei 100°C und 150°C gemessen werden, $HTHS_{100}$ - $HTHS_{150}$ beträgt vorzugsweise höchstens 4 mPas, besonders bevorzugt höchstens 3,3 mPas und ganz besonders bevorzugt höchstens 2,5 mPas. Das Verhältnis von Hochscherviskosität bei 100°C $HTHS_{100}$ zu Hochscherviskosität bei 150°C $HTHS_{150}$, $HTHS_{100}/HTHS_{150}$ beträgt vorzugsweise höchstens 2,0, besonders bevorzugt höchstens 1,9. Die Hochscherviskosität HTHS kann bei der jeweiligen Temperatur gemäß ASTM D4683 gemessen werden.

Gemäß einer zweckmäßigen Abwandlung kann der permanente Scherstabilitäts-Index (PSSI) nach ASTM D2603 Ref. B (12.5minütige Ultraschallbehandlung) kleiner oder gleich 35, besonders bevorzugt kleiner oder gleich 20 sein. Vorteilhaft können weiterhin Schmierölzusammensetzungen erhalten werden, die einen permanente Scherstabilitäts-Index (PSSI) nach DIN 51381 (30 Zyklen Bosch-Pumpe) von höchstens 5, bevorzugt höchstens 2 und ganz besonders bevorzugt höchstens 1 aufweisen.

Die Kraftstoffeinsparung (gegenüber 15W-40 Referenzmotorenöl RL191) für die Anwendung in Personenkraftwagen ermittelt man in Europa im Allgemeinen gemäß Prüfmethode CEC L-54-T-96 ("Mercedes-Benz M111 Fuel Economy Test"; CEC = Coordinating European Council for Development of Performance Tests for Transportation Fuels, Lubricants and Other Fluids). Neuere Ergebnisse (K. Hedrich, M. A. Mueller, M. Fischer: "Evaluation of Ashless, Phoshorus Free and Low Sulfur Polymeric Additives that Improve the Performance of Fuel Efficient Engine Oils" in Conference Proceedings of the International Tribology Conference (ITC 2005) at Kobe/Japan; K. Hedrich, G. Renner: "New Challange of VI Improver for Next Generation Engine Oils" in Conference Proceedings of the International Tribology Conference (ITC 2000) at Nagasaki/Japan) zeigen, dass auch eine andere Prüfmethode ("RohMax-Test") vergleichbare Ergebnisse liefern kann. Hier kommt nicht ein 2.0L-Benzinmotor sondern ein 1.9L-Dieselmotor (81 kW bei 4150 U/min) zum Einsatz. Der Aufbau dieses Motors entspricht im Wesentlichen dem in Prüfmethode CEC L-78-T-99 ("Volkswagen Turbocharged DI Diesel Piston Cleanliness and Ring Sticking Evaluation") beschriebenen Aufbau. Die genaue Einhaltung der Öltemperatur gemäß CEC L-54-T-96 macht dabei eine zusätzliche Kühlung am Aufbau notwendig. Gemeinsamkeiten und Unterschiede der CEC L-54-T-96 und des "RohMax-Tests" sind wie folgt zusammengestellt:

| | CEC L-54-T-96 ("Mercedes-Benz M111 Fuel Economy Test") | "RohMax-Test" unter Verwendung eines Aufbaus nach CEC L-78-T-99 |
|---|---|---|
| Motor | Mercedes-Benz 2.0L 4 Zylinder; Benzin | Volkswagen 1.9L TDI 4 Zylinder; Diesel |
| Programm | 3 Stadtzyklen à 195 Sekunden + au ßerstädtischer Fahrzyklus à 400 Sekunden | |
| | (in Anlehnung an den genormten Europäischen MVEG-Zyklus; MVEG = Motor Vehicle Emissions Group) | |
| Öltemperatur | 1. Stadtzyklus bei 20°C | |
| | 2. Stadtzyklus bei 33°C | |
| | 3. Stadtzyklus bei 75°C außerstädtischer Zyklus bei 88°C | |
| Bestimmung des Kraftstoffverbrauch | Gesamtzyklus gemessen [Gramm] | steigende Sequenz von Punktmessungen in Gramm/kWh (Mittelung über mehrere Messungen); sowohl in den Stadtzyklen als auch im außerstädtischen Zyklus; Gesamtzyklus berechnet [Gramm] |
| Ölwechsel | bei laufendem Motor (80L benötigte Ölmenge) | bei stehendem Motor, zweimaliges Spülen (15L benötigte Ölmenge |

Nach den Tests auf Prüfständen wie oben beschrieben erfolgt die Bestimmung des realen Kraftstoffverbrauches im Fahrzeug typischerweise in Form von Feldtests, beispielsweise unter Nutung einer Taxiflotte aus 10 Fahrzeugen, die eine definierte Strecke von km (z. B. 10000km) über einen definierten Zeitraum (z.B. 6 Monate) fahren.

Nachfolgend soll die vorliegende Erfindung anhand von Beispielen und Vergleichsbeispielen erläutert werden.

Synthesen der Kammpolymere

Beispiele 1 bis 5 und Vergleichsbeispiele 1 bis 3

In einer Apparatur mit 4-Halskolben und KPG-Säbelrührer wird ein 600g-Gemisch aus Gemisch aus niedermolekularen Monomeren und Makromonomer, dessen Zusammensetzung in Tabelle 1 dargelegt ist, sowie ein 400g-Gemisch aus Shell Risella 907 Gasöl und 35g 100N-Öl (65%/35%) vorgelegt. Nach Erwärmen unter Stickstoff auf 115°C werden 1.2g 2,2-Bis-*tert*-butyl-peroxybutan zugesetzt und die Temperatur gehalten. 3h und 6h nach der ersten Initiatorzugabe werden jeweils nochmals 1.2g 2,2-Bis-*tert*-butyl-peroxybutan nachgefüttert und über Nacht bei 115°C gerührt. Am darauf folgenden Tag wird mit 500g 150N-Öl von 60% auf 40% Feststoff verdünnt. Man erhält 1500g einer 40%igen Lösung an Kammpolymer in Mineralöl.

Tabelle 1

| | Monomerengemisch Brutto-Zusammensetzung [wt%] | | | | Netto-Polymerzusammensetzung [wt%] | | | |
|---|---|---|---|---|---|---|---|---|
| Beispiel 1 | hPBD$_{MM4800}$ 28,0 | nBMA 58,0 | Sty 14,0 | LMA 0 | 26 | 59 | 15 | 0 |
| Beispiel 2 | hPBD$_{MM4800}$ 25,0 | nBMA 64,0 | Sty 11,0 | LMA 0 | 23 | 65 | 12 | 0 |
| Beispiel 3 | hPBD$_{MM4800}$ 16,0 | nBMA 67,0 | Sty 12 | LMA 5 | 15 | 68 | 12 | 5 |
| Beispiel 4 | hPBD$_{MM4800}$ 12,0 | nBMA 71,0 | Sty 12 | LMA 5 | 11 | 71 | 13 | 5 |
| Beispiel 5 | hPBD$_{MM4800}$ 12,0 | nBMA 83,0 | Sty 0 | LMA 5 | 11 | 84 | 0 | 5 |
| Beispiel 6 | hPBD$_{MM4800}$ 42 | nBMA 18 | Sty 40 | MMA 0 | 40,8 | 18,4 | 40,9 | 0 |
| Vergleichsbeispiel 1 | hPBD$_{MM4800}$ 42,0 | nBMA 12,0 | Sty 3 | LMA 43 | 41 | 12 | 3 | 44 |
| Vergleichsbeispiel 2 | hPBD$_{MM4800}$ 20,0 | nBMA 20,0 | MMA 15 | LMA 45 | 18,4 | 20,4 | 15,3 | 45,9 |
| Vergleichsbeispiel 3 | hPBD$_{MM4800}$ 20,0 | nBMA 20,0 | MMA 8 | LMA 52 | 18,4 | 20,4 | 8,2 | 53 |

In Tabelle 1 bedeuten:

hPBD$_{MM4800}$: hydriertes Polybutadien der CrayValley (Paris) mit M$_n$=4800g/mol, T$_M$=-25°C und f$_{MM}$ im Bereich 90-95% (Makromonomer).
nBMA: n-Butylmethacrylat
Sty: Styrol
LMA: Alkylmethacrylat-Gemisch mit 12 bis 14 Kohlenstoffatomen in den Alkoholresten
MMA: Methylmethacylat

Die Makromonomer-Funktionalität f$_{MM}$ des Makromonomeren wurde aus den GPC-Kurven der Kammpolymere selbst abgeleitet, wie in WO 2007/025837 dargelegt.
Die Molekulargewichte und der Polydispersitätsindex PDI wurden über GPC bestimmt, wie in WO 2007/025837 dargelegt.

Tabelle 1 (Fortsetzung)

|  | $M_w$ [g/mol] | PDI | $f_{branch}$ |
|---|---|---|---|
| Beispiel 1 | 191000 | 3,5 | 1,0% |
| Beispiel 2 | 325000 | 4,2 | 0,8% |
| Beispiel 3 | 352000 | 3,7 | 0,5% |
| Beispiel 4 | 312000 | 3,5 | 0,4% |
| Beispiel 5 | 374000 | 4,5 | 0,4% |
| Beispiel 6 | 193000 | 4,0 | 1,6% |
| Vergleichsbeispiel 1 |  |  | 2,9% |
| Vergleichsbeispiel 2 | 662000 | 6,7 | 0,8% |
| Vergleichsbeispiel 3 | 599000 | 5,1 | 0,9% |

Evaluierung der Kammpolymere

A) in OW-20-Grundöl mit DI-Paket auf Basis von API Gruppe-I/III-Öl:

Die Charakterisierung der erhaltenen Kammpolymer-Additive erfolgt über Messungen der kinematischen Viskositäten bei 40°C und 100°C ($KV_{40}$ bzw. $KV_{100}$) nach ASTM D445, über die gemäß ASTM D5292 bestimmte CCS-Viskosität und über die bei 100°C nach ASTM D4683 gemessene Hochscherviskosität $HTHS_{100}$ einer Lösung von bei 150°C eingestellter Hochscherviskosität $HTHS_{150} = 2,6$mPas (ASTM D4683) in einem DI-Paket-haltigen OW-20-Grundöl (KV40=23.45 $mm^2$/s, KV100=4.92 $mm^2$/s, VI=138).

Es zeigt sich deutlich, dass die Kammpolymere eine wesentlich geringere $KV_{40}$ (ebenso geringere $KV_{100}$) bzw. eine geringere Hochscherviskosität $HTHS_{100}$ bei 100°C aufweisen als die in der Druckschrift EP 0699694 dargelegten Polymere. Ähnlich Verbesserungen werden auch in Bezug auf die CCS-Viskosität bei -35°C erhalten. Die Ergebnisse der dargelegten Evaluierung sind in Tabelle 2 dargelegt.

Zum Vergleich wurden des Weiteren kommerziell erhältliche VI-Verbesserer untersucht. Hierfür wurden Motorölformulierungen mit kommerziell erhältlichem Infineum SV200 (ein HSD Sternpolymer) und VISCOPLEX® 6-950 (lineares PAMA RohMax Additives GmbH) hergestellt. Diese Ergebnisse sind ebenfalls in Tabelle 2 dargelegt.

Tabelle 2

| Polymer gemäß | $KV_{40}$ [$mm^2$/s] | $KV_{100}$ [$mm^2$/s] | $HTHS_{100}$ [mPas] | CCS-35 [mPas] |
|---|---|---|---|---|
| Beispiel 1 | 27,9 | 6,52 | 4,96 | 4832 |
| Beispiel 2 | 27,5 | 6,51 | 4,83 | 4807 |
| Beispiel 3 | 27,3 | 6,56 | 4,82 | 5028 |
| Beispiel 4 | 26,4 | 6,30 | 4,63 | 4387 |
| Beispiel 5 | 26,2 | 6,34 | 4,68 | 4741 |
| Vergleichsbeispiel 1 | 39,0 | 8,14 | 5,40 | 5989 |
| Vergleichsbeispiel 2 | 35,3 | 8,73 | 5,20 | 5678 |
| Vergleichsbeispiel 3 | 39,7 | 9,19 | 5,37 | 5854 |
| Infineum SV200 | 36,8 | 7,70 | 4,95 | 5350 |
| VISCOPLEX® 6-950 | 37,0 | 8,64 | 5,01 | 5590 |

Des Weiteren wurden die Scherstabilitäten der Schmierölzusammensetzungen, die die Kammpolymere der Beispiele 1 bis 5 aufwiesen, untersucht. Hierzu wurden PSSI-Messungen nach DIN 51382 (30 Zyklen Bosch-Pumpe) durchgeführt, wobei alle Schmieröle einen exzellenten PSSI-Wert von 0 erzielten, d.h. die Produkte zeigen keinerlei $KV_{100}$-Abfall. Hierdurch gelingt es überraschend eine Schieölzusammensetzung bereitzustellen, die relativ nahe an der in den zuvor dargelegten Spezifikationen für die Viskositätswerte bei hoher Temperatur, beispielsweise 100°C, zu bleiben, ohne dass bei Gebrauch diese Werte unterschritten werden.

Zur Untersuchung der Kompatibilität der Kammpolymere mit Stockpunktsverbesserern wurden weitere Versuche durchgeführt. Hierzu wurden Schmierölzusammensetzungen hergestellt, die einen kommerziell erhältlichen Stockpunktverbesserer (VISCOPLEX® 1-247) in einer Konzentration von 0,37 Gew.-% umfassten. Hierbei wurden der Stockpunkt (*pour point* PP) nach ASTM D97 sowie dynamische Viskosität DV und Fließgrenze YS nach MRV-TP1 (ASTM D4684) gemessen. Die Ergebnisse sind in Tabelle 3 dargelegt.

Tabelle 3

| Polymer gemäß | PP [°C] | MRV-TP1 YS -40 [Pa] | MRV-TP1 DV -40 [mPa] |
|---|---|---|---|
| Beispiel 3 | -48 | < 35 | 20900 |
| Beispiel 4 | -42 | < 35 | 16030 |
| Beispiel 5 | -42 | < 35 | 18140 |

Die Ergebnisse zeigen, dass Schmierölzusammensetzungen, die vorliegenden Kammpolymere in Kombination mit Stockpunktsverbesserern, insbesondere auf Basis von PAMA hervorragende Tieftemperatureigenschaften aufweisen (Soll: <-40°C / <35Pa / <=60000mPas).

B) in OW-20-Grundöl auf Basis von API Gruppe-III-Öl:

Aus 11,2% HiTEC® 1192 (Afton Chemical), 8,8% Nexbase® 3030, 80% Nexbase® 3043 (Neste Oil) wurde ein OW-20-Grundöl von $KV40=27,24$ mm$^2$/s, $KV100=5,390$ mm$^2$/s und VI=136) dargestellt. Im Anschluss daran wurde wie unter A) die Viskosimetrie von Beispielen und Vergleichsbeispielen in Formulierungen von $HTHS_{150}=2,6$ mPas untersucht.

Auch in diesem OW-20 zeigte sich, dass die erfindungsgemäßen Kammpolymere eine wesentlich geringere $KV_{40}$ (ebenso geringere $KV_{100}$) bzw. eine geringere Hochscherviskosität $HTHS_{100}$ aufweisen als VISCOPLEX® 6-950. Ähnlich Verbesserungen werden auch in Bezug auf die CCS-Viskosität bei -35°C erhalten. Die Ergebnisse der dargelegten Evaluierung sind in Tabelle 4 dargelegt..

Tabelle 4

| Polymer gemäß | $KV_{40}$ [mm$^2$/s] | $KV_{100}$ [mm$^2$/s] | $HTHS_{100}$ [mPas] | CCS-35 [mPas] |
|---|---|---|---|---|
| Beispiel 3 | 30,82 | 6,623 | 4,98 | 5784 |
| Beispiel 5 | 30,49 | 6,595 | 4,85 | 5648 |
| VISCOPLEX® 6-950 | 41,54 | 10,06 | 5,52 | 6336 |

Auch in diesen 0W-20-Formulierungen sind in Präsenz eines kommerziell erhältlichen Stockpunktverbesserers auf Basis von PAMA (VISCOPLEX® 1-247 in einer Konzentration von ca. 0,37 Gew.%) ausgezeichnete MRV-TP1 Tieftemperatureigenschaften gegeben. Die Ergebnisse sind in Tabelle 5 dargelegt (Soll: <35Pa bzw. <=60000mPas).

Tabelle 5

| Polymer gemäß | MRV-TP1 YS -40 [Pa] | MRV-TP1 DV -40 [mPa] |
|---|---|---|
| Beispiel 3 | < 35 | 14350 |
| Beispiel 5 | < 35 | 14710 |

C) in 5W-30-Grundöl mit DI-Paket auf Basis von API Gruppe-III-Öl:

Schließlich wurde ein dritte Serie an Messungen in einem DI-Paket-haltigen 5W-30-Grundöl ($KV40=38,76$ mm$^2$/s, $KV100=6,938$ mm$^2$/s und VI=140) durchgeführt. Abweichend von der SAE J300, die für eine 5W-30-Formulierung "nur" $HTHS_{150}=2.9$mPas fordert, wurden die 5W-30-Formulierungen wie bei Europäischen Motorenherstellern (z.B. Mercedes-Benz Betriebsstoffvorschriften MB229.1 und MB228.3 für Werksbefüllungen) üblich auf $HTHS_{150}=3,5$mPas eingestellt.

Auch in den 5W-30-Formulierungen zeigte sich, dass die erfindungsgemäßen Kammpolymere eine wesentlich

geringere $KV_{40}$ (ebenso geringere $KV_{100}$) bzw. eine geringere Hochscherviskosität $HTHS_{100}$ aufweisen als VISCOPLEX® 6-950. Die Ergebnisse der dargelegten Evaluierung sind in Tabelle 6 zusammengestellt.

Tabelle 6

| Polymer gemäß | $KV_{40}$ [mm²/s] | $KV_{100}$ [mm²/s] | $HTHS_{100}$ [mPas] | CCS-30 [mPas] |
|---|---|---|---|---|
| Beispiel 3 | 46,19 | 9,502 | 6,76 | 6032 |
| Beispiel 5 | 46,04 | 10,200 | 6,49 | 5929 |
| VISCOPLEX® 6-950 | 71,69 | 15,29 | 7,63 | 6830 |

Auch in den 5W-30-Formulierungen sind in Präsenz eines kommerziell erhältlichen Stockpunktverbesserers auf Basis von PAMA (VISCOPLEX® 1-247 in einer Konzentration von ca. 0,37 Gew.%) ausgezeichnete MRV-TP1 Tieftemperatureigenschaften gegeben. Die Ergebnisse sind in Tabelle 7 dargelegt (Soll: <35Pa bzw. <=60000mPas).

Tabelle 7

| Polymer gemäß | MRV-TP1 YS -35 [Pa] | MRV-TP1 DV -35 [mPa] |
|---|---|---|
| Beispiel 3 | < 35 | 18010 |
| Beispiel 5 | < 35 | 17350 |

D) Untersuchung der Kraftstoffeinsparung mit dem "RohMax-Test"

Anhand des zuvor dargelegten RohMax-Tests wurde die Kraftstoffeinsparung verschiedener Polymere untersucht. Zur Bestimmung der Messgenauigkeit der Untersuchung wurde zu Beginn und zu Ende der Versuchsreihe ein Lauf mit einem 15W-40 Öl (CEC Referenzmotorenöl RL191) durchgeführt. Die Bestimmung der Kraftstoffeinsparung wurden mit den in Tabelle 8 dargelegten Polymeren durchgeführt, wozu entsprechend den unter Punkt C) dargelegten Beispielen 5W-30-Formulierungen hergestellt wurden. Die erzielten Ergebnisse sind ebenfalls in Tabelle 8 dargelegt.

Tabelle 8

| Polymer gemäß | Formulierung | Verbrauch [g] |
|---|---|---|
| Beispiel 5 | 5W-30 | 658,77 |
| Beispiel 6 | 5W-30 | 659,09 |
| VISCOPLEX® 6-950 | 5W-30 | 664,21 |
| - | 15W-40 (vor den Testläufen) | 675,03 |
| - | 15W-40 | 675,09 |
| | (nach den Testläufen) | |

Die Versuche zeigen eine ganz ausgezeichnete Wiederholbarkeit, wie dies aus den Vergleichsläufen mit dem 15W-40 Referenzöl ersichtlich ist. Diese Wiederholbarkeit, die weit unter 0,1 g liegt, konnte insbesondere durch eine sorgfältige Kontrolle der Temperaturbedingungen erzielt werden.

Darüber hinaus zeigt sich, dass bei der erfindungsgemäßen Verwendung von Kammpolymeren eine gegenüber VISCOPLEX® 6-950 überraschend hohe Kraftstoffersparnis erzielt werden kann. Weiterhin zeigt ein Vergleich von Beispiel 5 mit Beispiel 6, dass unter Verwendung der in Anspruch 3 dargelegten Kammpolymere eine weitere, signifikante Verringerung des Kraftstoffverbrauchs eintritt.

**Patentansprüche**

1. Verwendung von Kammpolymeren umfassend in der Hauptkette Wiederholungseinheiten, die von Polyolefin-basierten Makromonomeren abgeleitet sind, und Wiederholungseinheiten, die von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleaten mit 1 bis 10 Kohlenstoffatomen in der Alkoholgruppe sowie Mischungen dieser Monomeren abgeleitet sind, wobei der molare Verzweigungsgrad im Bereich von 0,3 bis 3,6 Mol.-% liegt und das Kammpolymer in Summe mindestens 80 Gew.-%, bezogen auf das Gewicht der Wiederholungseinheiten, an Wiederholungseinheiten, die von Polyolefin-basierten Makromonomeren abgeleitet sind, und Wiederholungseinheiten, die von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleaten mit 1 bis 10 Kohlenstoffatomen in der Alkoholgruppe sowie Mischungen dieser Monomeren abgeleitet sind, umfasst, zur Verringerung des Kraftstoffverbrauchs von Fahrzeugen.

2. Verwendung gemäß Anspruch 1, **dadurch gekennzeichnet, dass** der molare Verzweigungsgrad im Bereich von 0,3 bis 1,1 Mol.-% liegt.

3. Verwendung gemäß mindestens einem der vorhergehenden Ansprüche 1 oder 2, **dadurch gekennzeichnet, dass** das Kammpolymere 11 bis 26 Gew.-% an Wiederholungseinheiten aufweist, die von Polyolefin-basierten Makromonomeren abgeleitet sind.

4. Verwendung gemäß mindestens einem der vorhergehenden Ansprüche 1 bis 3, **dadurch gekennzeichnet, dass** die Wiederholungseinheiten, die von Polyolefin basierten Makromonomeren abgeleitet sind, ein Zahlenmittel des Molekulargewicht im Bereich von 700 bis 10000 g/mol aufweisen.

5. Verwendung gemäß mindestens einem der vorhergehenden Ansprüche 1 bis 4, **dadurch gekennzeichnet, dass** das Kammpolymer mindestens 90 Gew.-% Wiederholungseinheiten umfasst, die von Polyolefin-basierten Makromonomeren abgeleitet sind und von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleaten mit 1 bis 10 Kohlenstoffatomen in der Alkoholgruppe sowie Mischungen dieser Monomeren abgeleitet sind.

6. Verwendung gemäß mindestens einem der vorhergehenden Ansprüche 1 bis 5, **dadurch gekennzeichnet, dass** der Polydispersitätsindex Mw/Mn im Bereich von 1 bis 5 liegt.

7. Verwendung gemäß mindestens einem der vorhergehenden Ansprüche 1 bis 6, **dadurch gekennzeichnet, dass** der molare Verzweigungsgrad des Kammpolymeren im Bereich 0,4% bis 1,0% Mol.-% liegt.

8. Verwendung gemäß Anspruch 7, **dadurch gekennzeichnet, dass** der molare Verzweigungsgrad des Kammpolymeren im Bereich 0,4% bis 0,6% Mol.-% liegt.

9. Verwendung gemäß mindestens einem der vorhergehenden Ansprüche 1 bis 8, **dadurch gekennzeichnet, dass** die von Polyolefin-basierten Makromonomeren abgeleiteten Wiederholungseinheiten Gruppen umfassen, die von Monomeren ausgewählt aus der Gruppe bestehend aus $C_2$-$C_{10}$-Alkenen und/oder $C_4$-$C_{10}$-Alkadienen abgeleitet sind.

10. Verwendung gemäß Anspruch 9, **dadurch gekennzeichnet, dass** die von Polyolefin-basierten Makromonomeren abgeleiteten Wiederholungseinheiten mindestens 80 Gew.-% Gruppen umfassen, die von Monomeren ausgewählt aus der Gruppe bestehend aus C2-C10-Alkenen und/oder C4-C10-Alkadienen abgeleitet sind, bezogen auf das Gewicht der von Polyolefin-basierten Makromonomeren abgeleiteten Wiederholungseinheiten.

11. Verwendung gemäß mindestens einem der vorhergehenden Ansprüche 1 bis 10, **dadurch gekennzeichnet, dass** die Schmelztemperatur der von Polyolefin-basierten Makromonomeren abgeleiteten Wiederholungseinheiten kleiner oder gleich -10°C ist.

12. Verwendung gemäß mindestens einem der vorhergehenden Ansprüche 1 bis 11, **dadurch gekennzeichnet, dass** keine Schmelztemperatur der von Polyolefin-basierten Makromonomeren abgeleiteten Wiederholungseinheiten gemessen werden kann.

13. Verwendung gemäß mindestens einem der vorhergehenden Ansprüche 1 bis 12, **dadurch gekennzeichnet, dass** das Kammpolymer Wiederholungseinheiten aufweist, die von n-Butylmethacrylat und/oder von n-Butylacrylat abgeleitet sind.

14. Verwendung gemäß mindestens einem der vorhergehenden Ansprüche 1 bis 13, **dadurch gekennzeichnet, dass** der Anteil an Wiederholungseinheiten, die von n-Butylmethacrylat und/oder von n-Butylacrylat abgeleitet sind, mindestens 50 Gew.-% beträgt.

15. Verwendung gemäß mindestens einem der vorhergehenden Ansprüche 1 bis 14, **dadurch gekennzeichnet, dass** das Kammpolymer Wiederholungseinheiten aufweist, die von Styrol abgeleitet sind.

16. Verwendung gemäß mindestens einem der vorhergehenden Ansprüche 1 bis 15, **dadurch gekennzeichnet, dass** der Anteil an Wiederholungseinheiten, die von Styrol abgeleitet sind, im Bereich von 5 bis 25 Gew.-% liegt.

17. Verwendung gemäß mindestens einem der vorhergehenden Ansprüche 1 bis 16, **dadurch gekennzeichnet, dass** das Kammpolymer ein gewichtsgemitteltes Molekulargewicht im Bereich von 100 000 bis 500 000g/mol aufweist.

18. Verwendung gemäß mindestens einem der vorhergehenden Ansprüche 1 bis 17, **dadurch gekennzeichnet, dass** das Kammpolymere Wiederholungseinheiten aufweist, die von Alkyl(meth)acrylaten mit 11-30 Kohlenstoffatomen im Alkylrest abgeleitet sind.

19. Verwendung gemäß Anspruch 18, **dadurch gekennzeichnet, dass** der Anteil an Wiederholungseinheiten, die von Alkyl(meth)acrylaten mit 11-30 Kohlenstoffatomen im Alkylrest abgeleitet sind, im Bereich von 1-10 Gew.-% liegt.

20. Verwendung einer Schmierölzusammensetzung, enthaltend 0,1 bis 40 Gew.-% Kammpolymere umfassend in der Hauptkette Wiederholungseinheiten, die von Polyolefin-basierten Makromonomeren abgeleitet sind, und Wiederholungseinheiten, die von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleaten mit 1 bis 10 Kohlenstoffatomen in der Alkoholgruppe sowie Mischungen dieser Monomeren abgeleitet sind, wobei der molare Verzweigungsgrad im Bereich von 0,3 bis 3,6 Mol.-% liegt und das Kammpolymer in Summe mindestens 80 Gew.-%, bezogen auf das Gewicht der Wiederholungseinheiten, an Wiederholungseinheiten, die von Polyolefin-basierten Makromonomeren abgeleitet sind, und Wiederholungseinheiten, die von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleaten mit 1 bis 10 Kohlenstoffatomen in der Alkoholgruppe sowie Mischungen dieser Monomeren abgeleitet sind, und umfassend mindestens ein Schmieröl zur Verringerung des Kraftstoffverbrauchs von Fahrzeugen.

21. Verwendung gemäß Anspruch 20, **dadurch gekennzeichnet, dass** die Schmierölzusammensetzung Basisöle der API Gruppe I, II, III, IV und/oder Gruppe V umfasst.

22. Verwendung gemäß mindestens einem der Ansprüche 20 oder 21, **dadurch gekennzeichnet, dass** die Konzentration des Kammpolymeren in der Schmierölzusammensetzung im Bereich von 0,2 - 20 Gew.-% liegt.

23. Verwendung gemäß mindestens einem der Ansprüche 20 oder 21, **dadurch gekennzeichnet, dass** der PSSI der Schmierölzusammensetzung nach ASTM D2603 Ref. B kleiner oder gleich 35 ist.

24. Verwendung gemäß mindestens einem der Ansprüche 20 bis 23, **dadurch gekennzeichnet, dass** die Schmierölzusammensetzung mindestens ein zusätzliches Additiv umfasst, das keine Kammpolymere gemäß den Ansprüchen 1 bis 19 darstellt.

25. Verwendung gemäß Anspruch 24, **dadurch gekennzeichnet, dass** das Additiv einen Viskositätsindexverbesserer, Stockpunktverbesserer, Dispergiermittel, Detergens, Entschäumer, Korrosionsinhibitor, Antioxidationsmittel, Verschleißschutzadditiv, Extremdruckadditiv und/oder Reibwertveränderer darstellt.

**26.** Verwendung gemäß Anspruch 24 oder 25, **dadurch gekennzeichnet, dass** das Additiv auf einem linearen Polyalkyl (meth)acrylat mit 1 bis 30 Kohlenstoffatomen in der Alkoholgruppe basiert.

**Claims**

**1.** Use of comb polymers comprising, in the main chain, repeat units which are derived from polyolefin-based macromonomers, and repeat units which are derived from low molecular weight monomers selected from the group consisting of styrene monomers having 8 to 17 carbon atoms, alkyl (meth)acrylates having 1 to 10 carbon atoms in the alcohol group, vinyl esters having 1 to 11 carbon atoms in the acyl group, vinyl ethers having 1 to 10 carbon atoms in the alcohol group, (di)alkyl fumarates having 1 to 10 carbon atoms in the alcohol group, (di)alkyl maleates having 1 to 10 carbon atoms in the alcohol group and mixtures of these monomers, where the molar degree of branching is in the range of 0.3 to 3.6 mol% and the comb polymer comprises a total of at least 80% by weight, based on the weight of the repeat units, of repeat units which are derived from polyolefin-based macromonomers and repeat units which are derived from low molecular weight monomers selected from the group consisting of styrene monomers having 8 to 17 carbon atoms, alkyl (meth)acrylates having 1 to 10 carbon atoms in the alcohol group, vinyl esters having 1 to 11 carbon atoms in the acyl group, vinyl ethers having 1 to 10 carbon atoms in the alcohol group, (di)alkyl fumarates having 1 to 10 carbon atoms in the alcohol group, (di)alkyl maleates having 1 to 10 carbon atoms in the alcohol group and mixtures of these monomers, for reducing the fuel consumption of vehicles.

**2.** Use according to Claim 1, **characterized in that** the molar degree of branching is in the range of 0.3 to 1.1 mol%.

**3.** Use according to at least one of the preceding Claims 1 and 2, **characterized in that** the comb polymer has 11 to 26% by weight of repeat units which are derived from polyolefin-based macromonomers.

**4.** Use according to at least one of the preceding Claims 1 to 3, **characterized in that** the repeat units which are derived from polyolefin-based macromonomers have a number-average molecular weight in the range of 700 to 10 000 g/mol.

**5.** Use according to at least one of the preceding Claims 1 to 4, **characterized in that** the comb polymer comprises at least 90% by weight of repeat units which are derived from polyolefin-based macromonomers and from low molecular weight monomers selected from the group consisting of styrene monomers having 8 to 17 carbon atoms, alkyl (meth)acrylates having 1 to 10 carbon atoms in the alcohol group, vinyl esters having 1 to 11 carbon atoms in the acyl group, vinyl ethers having 1 to 10 carbon atoms in the alcohol group, (di)alkyl fumarates having 1 to 10 carbon atoms in the alcohol group, (di)alkyl maleates having 1 to 10 carbon atoms in the alcohol group and mixtures of these monomers.

**6.** Use according to at least one of the preceding Claims 1 to 5, **characterized in that** the polydispersity index Mw/Mn is in the range of 1 to 5.

**7.** Use according to at least one of the preceding Claims 1 to 6, **characterized in that** the molar degree of branching of the comb polymer is in the range of 0.4 to 1.0 mol%.

**8.** Use according to Claim 7, **characterized in that** the molar degree of branching of the comb polymer is in the range of 0.4 to 0.6 mol%.

**9.** Use according to at least one of the preceding Claims 1 to 8, **characterized in that** the repeat units derived from polyolefin-based macromonomers comprise groups which are derived from monomers selected from the group consisting of $C_2$-$C_{10}$-alkenes and/or $C_4$-$C_{10}$-alkadienes.

**10.** Use according to Claim 9, **characterized in that** the repeat units derived from polyolefin-based macromonomers comprise at least 80% by weight of groups which are derived from monomers selected from the group consisting of $C_2$-$C_{10}$-alkenes and/or $C_4$-$C_{10}$-alkadienes, based on the weight of the repeat units derived from polyolefin-based macromonomers.

**11.** Use according to at least one of the preceding Claims 1 to 10, **characterized in that** the melting point of the repeat units derived from polyolefin-based macromonomers is less than or equal to -10°C.

12. Use according to at least one of the preceding Claims 1 to 11, **characterized in that** no melting point of the repeat units derived from polyolefin-based macromonomers can be measured.

13. Use according to at least one of the preceding Claims 1 to 12, **characterized in that** the comb polymer has repeat units which are derived from n-butyl methacrylate and/or from n-butyl acrylate.

14. Use according to at least one of the preceding Claims 1 to 13, **characterized in that** the proportion of repeat units which are derived from n-butyl methacrylate and/or from n-butyl acrylate is at least 50% by weight.

15. Use according to at least one of the preceding Claims 1 to 14, **characterized in that** the comb polymer has repeat units which are derived from styrene.

16. Use according to at least one of the preceding Claims 1 to 15, **characterized in that** the proportion of repeat units which are derived from styrene is in the range of from 5 to 25% by weight.

17. Use according to at least one of the preceding Claims 1 to 16, **characterized in that** the comb polymer has a weight-average molecular weight in the range of 100 000 to 500 000 g/mol.

18. Use according to at least one of the preceding Claims 1 to 17, **characterized in that** the comb polymer has repeat units which are derived from alkyl (meth)acrylates having 11-30 carbon atoms in the alkyl radical.

19. Use according to Claim 18, **characterized in that** the proportion of repeat units which are derived from alkyl (meth)acrylates having 11-30 carbon atoms in the alkyl radical is in the range of 1-10% by weight.

20. Use of a lubricant oil composition containing 0.1 to 40% by weight of comb polymers comprising, in the main chain, repeat units which are derived from polyolefin-based macromonomers, and repeat units which are derived from low molecular weight monomers selected from the group consisting of styrene monomers having 8 to 17 carbon atoms, alkyl (meth)acrylates having 1 to 10 carbon atoms in the alcohol group, vinyl esters having 1 to 11 carbon atoms in the acyl group, vinyl ethers having 1 to 10 carbon atoms in the alcohol group, (di)alkyl fumarates having 1 to 10 carbon atoms in the alcohol group, (di)alkyl maleates having 1 to 10 carbon atoms in the alcohol group and mixtures of these monomers, where the molar degree of branching is in the range of 0.3 to 3.6 mol% and the comb polymer comprises a total of at least 80% by weight, based on the weight of the repeat units, of repeat units which are derived from polyolefin-based macromonomers and repeat units which are derived from low molecular weight monomers selected from the group consisting of styrene monomers having 8 to 17 carbon atoms, alkyl (meth)acrylates having 1 to 10 carbon atoms in the alcohol group, vinyl esters having 1 to 11 carbon atoms in the acyl group, vinyl ethers having 1 to 10 carbon atoms in the alcohol group, (di)alkyl fumarates having 1 to 10 carbon atoms in the alcohol group, (di)alkyl maleates having 1 to 10 carbon atoms in the alcohol group and mixtures of these monomers, and comprising at least one lubricant oil for reducing the fuel consumption of vehicles.

21. Use according to Claim 20, **characterized in that** the lubricant oil composition comprises base oils from API group I, II, III, IV and/or group V.

22. Use according to at least one of Claims 20 and 21, **characterized in that** the concentration of the comb polymer in the lubricant oil composition is in the range of 0.2-20% by weight.

23. Use according to at least one of Claims 20 and 21, **characterized in that** the PSSI of the lubricant oil composition to ASTM D2603 Ref. B is less than or equal to 35.

24. Use according to at least one of Claims 20 to 23, **characterized in that** the lubricant oil composition comprises at least one additional additive which is not a comb polymer according to Claims 1 to 19.

25. Use according to Claim 24, **characterized in that** the additive is a viscosity index improver, pour point improver, dispersant, detergent, defoamer, corrosion inhibitor, antioxidant, antiwear additive, extreme pressure additive and/or friction modifier.

26. Use according to Claim 24 or 25, **characterized in that** the additive is based on a linear polyalkyl (meth)acrylate having 1 to 30 carbon atoms in the alcohol group.

**Revendications**

1. Utilisation de polymères en peigne comprenant dans la chaîne principale des motifs répétitifs qui sont dérivés de macromonomères à base de polyoléfine, et des motifs répétitifs qui sont dérivés de monomères de faible masse moléculaire, choisis dans le groupe constitué par des monomères styrène ayant de 8 à 17 atomes de carbone, des (méth)acrylates d'alkyle ayant de 1 à 10 atomes de carbone dans le groupe alcool, des esters vinyliques ayant de 1 à 11 atomes de carbone dans le groupe acyle, des éthers vinyliques ayant de 1 à 10 atomes de carbone dans le groupe alcool, des fumarates d'alkyle/de dialkyle ayant de 1 à 10 atomes de carbone dans le groupe alcool, des maléates d'alkyle/de dialkyle ayant de 1 à 10 atomes de carbone dans le groupe alcool ainsi que des mélanges de ces monomères, le degré de ramification molaire se situant dans la plage de 0,3 à 3,6 % en moles et le polymère en peigne comprenant au total au moins 80 % en poids, par rapport au poids des motifs répétitifs, de motifs répétitifs qui sont dérivés de macromonomères à base de polyoléfine, et de motifs répétitifs qui sont dérivés de monomères de faible masse moléculaire, choisis dans le groupe constitué par des monomères styrène ayant de 8 à 17 atomes de carbone, des (méth)acrylates d'alkyle ayant de 1 à 10 atomes de carbone dans le groupe alcool, des esters vinyliques ayant de 1 à 11 atomes de carbone dans le groupe acyle, des éthers vinyliques ayant de 1 à 10 atomes de carbone dans le groupe alcool, des fumarates d'alkyle/de dialkyle ayant de 1 à 10 atomes de carbone dans le groupe alcool, des maléates d'alkyle/de dialkyle ayant de 1 à 10 atomes de carbone dans le groupe alcool ainsi que des mélanges de ces monomères, pour la diminution de la consommation de carburant de véhicules.

2. Utilisation selon la revendication 1, **caractérisée en ce que** le degré de ramification molaire se situe dans la plage de 0,3 à 1,1 % en moles.

3. Utilisation selon au moins l'une quelconque des revendications 1 et 2 précédentes, **caractérisée en ce que** le polymère en peigne comporte de 11 à 26 % en poids de motifs répétitifs qui sont dérivés de macromonomères à base de polyoléfine.

4. Utilisation selon au moins l'une quelconque des revendications 1 à 3 précédentes, **caractérisée en ce que** les motifs répétitifs qui sont dérivés de macromonomères à base de polyoléfine présentent une moyenne en nombre de la masse moléculaire dans la plage de 700 à 10 000 g/mole.

5. Utilisation selon au moins l'une quelconque des revendications 1 à 4 précédentes, **caractérisée en ce que** le polymère en peigne comprend au moins 90 % en poids de motifs répétitifs qui sont dérivés de macromonomères à base de polyoléfine et sont dérivés de monomères de faible masse moléculaire, choisis dans le groupe constitué par des monomères styrène ayant de 8 à 17 atomes de carbone, des (méth)acrylates d'alkyle ayant de 1 à 10 atomes de carbone dans le groupe alcool, des esters vinyliques ayant de 1 à 11 atomes de carbone dans le groupe acyle, des éthers vinyliques ayant de 1 à 10 atomes de carbone dans le groupe alcool, des fumarates d'alkyle/de dialkyle ayant de 1 à 10 atomes de carbone dans le groupe alcool, des maléates d'alkyle/de dialkyle ayant de 1 à 10 atomes de carbone dans le groupe alcool ainsi que des mélanges de ces monomères.

6. Utilisation selon au moins l'une quelconque des revendications 1 à 5 précédentes, **caractérisée en ce que** l'indice de polydispersité Mw/Mn se situe dans la plage de 1 à 5.

7. Utilisation selon au moins l'une quelconque des revendications 1 à 6 précédentes, **caractérisée en ce que** le degré de ramification molaire du polymère en peigne se situe dans la plage de 0,4 % à 1,0 % en moles.

8. Utilisation selon la revendication 7, **caractérisée en ce que** le degré de ramification molaire du polymère en peigne se situe dans la plage de 0,4 % à 0,6 % en moles.

9. Utilisation selon la au moins l'une quelconque des revendications 1 à 8 précédentes, **caractérisée en ce que** les motifs répétitifs dérivés de macromonomères à base de polyoléfine comprennent des groupes qui sont dérivés de monomères choisis dans le groupe constitué par des alcènes en $C_2$-$C_{10}$ et/ou des alcadiènes en $C_4$-$C_{10}$.

10. Utilisation selon la revendication 9, **caractérisée en ce que** les motifs répétitifs dérivés de macromonomères à base de polyoléfine comprennent au moins 80 % en poids de groupes qui sont dérivés de monomères choisis dans le groupe constitué par des alcènes en $C_2$-$C_{10}$ et/ou des alcadiènes en $C_4$-$C_{10}$, par rapport au poids des motifs répétitifs dérivés de macromonomères à base de polyoléfine.

11. Utilisation selon au moins l'une quelconque des revendications 1 à 10 précédentes, **caractérisée en ce que** la

22

température de fusion des motifs répétitifs dérivés de macromonomères à base de polyoléfine est inférieure ou égale à -10 °C.

12. Utilisation selon au moins l'une quelconque des revendications 1 à 11 précédentes, **caractérisée en ce qu'**aucune température de fusion des motifs répétitifs dérivés de macromonomères à base de polyoléfine ne peut être mesurée.

13. Utilisation selon au moins l'une quelconque des revendications 1 à 12 précédentes, **caractérisée en ce que** le polymère en peigne comporte des motifs répétitifs qui sont dérivés de méthacrylate de n-butyle et/ou d'acrylate de n-butyle.

14. Utilisation selon au moins l'une quelconque des revendications 1 à 13 précédentes, **caractérisée en ce que** la proportion de motifs répétitifs qui sont dérivés de méthacrylate de n-butyle et/ou d'acrylate de n-butyle est d'au moins 50 % en poids.

15. Utilisation selon au moins l'une quelconque des revendications 1 à 14 précédentes, **caractérisée en ce que** le polymère en peigne comporte des motifs répétitifs qui sont dérivés de styrène.

16. Utilisation selon au moins l'une quelconque des revendications 1 à 15 précédentes, **caractérisée en ce que** la proportion des motifs répétitifs qui sont dérivés de styrène se situe dans la plage de 5 à 25 % en poids.

17. Utilisation selon au moins l'une quelconque des revendications 1 à 16 précédentes, **caractérisée en ce que** le polymère en peigne présente une masse moléculaire moyenne en poids dans la plage de 100 000 à 500 000 g/mole.

18. Utilisation selon au moins l'une quelconque des revendications 1 à 17 précédentes, **caractérisée en ce que** le polymère en peigne comporte des motifs répétitifs qui sont dérivés de (méth)acrylates d'alkyle ayant 11-30 atomes de carbone dans le radical alkyle.

19. Utilisation selon la revendication 18, **caractérisée en ce que** la proportion de motifs répétitifs qui sont dérivés de (méth)acrylates d'alkyle ayant 11-30 atomes de carbone dans le radical alkyle, se situe dans la plage de 1-10 % en poids.

20. Utilisation d'une composition d'huile lubrifiante, contenant 0,1 à 40 % en poids de polymères en peigne comprenant dans la chaîne principale des motifs répétitifs qui sont dérivés de macromonomères à base de polyoléfine, et des motifs répétitifs qui sont dérivés de monomères de faible masse moléculaire, choisis dans le groupe constitué par des monomères styrène ayant de 8 à 17 atomes de carbone, des (méth)acrylates d'alkyle ayant de 1 à 10 atomes de carbone dans le groupe alcool, des esters vinyliques ayant de 1 à 11 atomes de carbone dans le groupe acyle, des éthers vinyliques ayant de 1 à 10 atomes de carbone dans le groupe alcool, des fumarates d'alkyle/de dialkyle ayant de 1 à 10 atomes de carbone dans le groupe alcool, des maléates d'alkyle/de dialkyle ayant de 1 à 10 atomes de carbone dans le groupe alcool ainsi que des mélanges de ces monomères, le degré de ramification molaire se situant dans la plage de 0,3 à 3,6 % en moles et le polymère en peigne comprenant au total au moins 80 % en poids, par rapport au poids des motifs répétitifs, de motifs répétitifs qui sont dérivés de macromonomères à base de polyoléfine, et de motifs répétitifs qui sont dérivés de monomères de faible masse moléculaire, choisis dans le groupe constitué par des monomères styrène ayant de 8 à 17 atomes de carbone, des (méth)acrylates d'alkyle ayant de 1 à 10 atomes de carbone dans le groupe alcool, des esters vinyliques ayant de 1 à 11 atomes de carbone dans le groupe acyle, des éthers vinyliques ayant de 1 à 10 atomes de carbone dans le groupe alcool, des fumarates d'alkyle/de dialkyle ayant de 1 à 10 atomes de carbone dans le groupe alcool, des maléates d'alkyle/de dialkyle ayant de 1 à 10 atomes de carbone dans le groupe alcool ainsi que des mélanges de ces monomères, et comprenant au moins une huile lubrifiante pour la diminution de la consommation de carburant de véhicules.

21. Utilisation selon la revendication 20, **caractérisée en ce que** la composition d'huile lubrifiante comprend des huiles de base du groupe API I, II, III, IV et/ou du groupe V.

22. Utilisation selon au moins l'une quelconque des revendications 20 et 21, **caractérisée en ce que** la concentration du polymère en peigne dans la composition d'huile lubrifiante se situe dans la plage de 0,2 - 20 % en poids.

23. Utilisation selon au moins l'une quelconque des revendications 20 et 21, **caractérisée en ce que** l'indice PSSI de la composition d'huile lubrifiante selon ASTM D2603 réf. B est inférieur ou égal à 35.

**24.** Utilisation selon au moins l'une quelconque des revendications 20 à 23, **caractérisée en ce que** la composition d'huile lubrifiante comprend au moins un additif supplémentaire qui ne représente pas des polymères en peigne selon les revendications 1 à 19.

**25.** Utilisation selon la revendication 24, **caractérisée en ce que** l'additif représente un agent améliorant l'indice de viscosité, un agent améliorant le point d'écoulement, un dispersant, un détergent, un antimousse, un agent anticorrosion, un antioxydant, un additif de protection contre l'usure, un additif extrême pression et/ou un modificateur du coefficient de frottement.

**26.** Utilisation selon la revendication 24 ou 25, **caractérisée en ce que** l'additif est à base d'un poly((méth)acrylate d'alkyle) linéaire ayant de 1 à 30 atomes de carbone dans le groupe alcool.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4116917 A
- US 3772196 A
- US 4788316 A
- EP 0621293 A
- EP 0699694 A
- WO 2007025837 A
- WO 2007003238 A
- US 5565130 A
- DE 1520696
- WO 2006007934 A
- WO 9630421 A

- WO 9747661 A
- WO 9718247 A
- WO 9840415 A
- WO 9910387 A
- WO 9801478 A
- WO 2004083169 A
- EP 0244616 A
- WO 2004067583 A
- EP 0628575 A
- EP 0277345 A
- GB 2270317 A

**In der Beschreibung aufgeführte Nicht-Patentliteratur**

- **K. HEDRICH ; M. A. MUELLER ; M. FISCHER.** Evaluation of Ashless, Phoshorus Free and Low Sulfur Polymeric Additives that Improve the Performance of Fuel Efficient Engine Oils. *Conference Proceedings of the International Tribology Conference,* 2005
- Additives for Petroleum-derived Products. Saiwai Shobou Press, 1986
- **A. K. GANGOPADHYAY ; J. SORAB ; P. A. WILLERMET ; K. SCHRIEWER ; K. FYFE ; P. K. S LAI.** Prediction of ASTM Sequence VI and VIA Fuel Economy Based on Laboratory Bench Tests. *SAE Technical Paper Series 961140; N. Nakamura: Idemitsu Technical Review,* 2000, vol. 43, 24
- Lubricants and Lubrication. Wiley-VCH, 2001
- Ullmanns's Encyclopedia of Industrial Chemistry

- **J-S. WANG et al.** *J.Am.Chem.Soc.,* 1995, vol. 117, 5614-5615
- **MATYJASZEWSKI.** *Macromolecules,* 1995, vol. 28, 7901-7910
- Ullmanns Encyclopedia of Industrial Chemistry. 1997
- **K. MARSDEN.** Literature Review of OCP Viscosity Modifiers. *Lubrication Science,* 1988, vol. 1, 265
- Chemistry and Technology of Lubricants. Blackie Academic & Professional, 1992
- **J. BARTZ.** Additive für Schmierstoffe. Expert-Verlag, 1994
- Chemistry and Technology of Lubricants
- **K. HEDRICH ; G. RENNER.** New Challange of VI Improver for Next Generation Engine Oils. *Conference Proceedings of the International Tribology Conference,* 2000